# EUROPEAN PATENT APPLICATION

(11) **EP 4 835 352 A1**
(43) Date of publication of application: **04.11.2026**
(21) Application number: 24913062.6
(22) Date of filing: 26.12.2024
(51) Int. Cl.: F21V 23/00, G03B 21/00

(54) **ILLUMINATION MODULE, DEVICE WITH ILLUMINATION MODULE, ILLUMINATION MODULE UNIT, ILLUMINATION SYSTEM, AND ILLUMINATION METHOD**

(30) Priority: 28.12.2023 JP 2023223568
(71) Applicant: Dai Nippon Printing Co., Ltd., Tokyo 162-8001 (JP)
(72) Inventor: ISHIDA, Kazutoshi, Tokyo 162-8001 (JP); KURASHIGE, Makio, Tokyo 162-8001 (JP); SHIMADA, Osamu, Tokyo 162-8001 (JP); NISHIO, Shumpei, Tokyo 162-8001 (JP); NAKATSUGAWA, Kaori, Tokyo 162-8001 (JP); SATO, Tomoe, Tokyo 162-8001 (JP)
(74) Representative: Müller-Boré & Partner Patentanwälte PartG mbB
(86) International application number: PCT/JP2024/046292
(87) International publication number: WO 2025/143176

(57) **Abstract**

An illumination module is an illumination module that projects a projection pattern onto a projection surface. The illumination module includes a light source, an optical system that faces the light source in an axial direction, a case that holds the light source and the optical system, a cover that partially covers the case, and a circuit board that is positioned between the case and the cover. The circuit board is positioned at least partially between an exit end of the optical system and the light source in the axial direction.

## Description

### Technical Field

The present disclosure relates to an illumination module, an apparatus with an illumination module, an illumination module unit, an illumination system, and an illumination method.

### Background Art

As described in Patent Literature 1 (JP2016-90318A), an illumination apparatus that projects a projection pattern onto a projection surface is known. It is useful for the illumination apparatus to project the projection pattern onto the projection surface in relation to an operation or the like of another apparatus.

In this application, it is convenient if an illumination module that projects the projection pattern onto the projection surface can be incorporated in or attached to another apparatus that cooperates therewith.

### Summary of Invention

An object of the present disclosure is to provide an illumination module suitable for being incorporated in or attached to another apparatus.

A first illumination module according to an embodiment of the present disclosure is
an illumination module that projects a projection pattern onto a projection surface, the illumination module including:
a light source that emits light;
an optical system that faces the light source in an axial direction of the illumination module;
a case that holds the light source and the optical system; and
a circuit board that is electrically connected to the light source,
in which, in the axial direction, the circuit board is positioned at least partially between the light source and an exit end of the optical system from which light emitted from the light source exits.

A second illumination module according to the embodiment of the present disclosure is
an illumination module that projects a projection pattern onto a projection surface, the illumination module including:
a light source that emits light;
an optical system that faces the light source in an axial direction of the illumination module;
a case that holds the light source and the optical system; and
a circuit board that is electrically connected to the light source,
in which the circuit board includes a socket that is in contact with a terminal of the light source to be electrically connected to the terminal, and
in which the light source is positioned between the circuit board and the optical system in the axial direction.

According to the present disclosure, an illumination module suitable for being incorporated in or attached to another apparatus is obtained.

### Brief Description of Drawings

[Fig. 1A] Fig. 1A is a diagram for explaining the embodiment, and is the diagram illustrating an example of an apparatus with an illumination module.
[Fig. 1B] Fig. 1B is a diagram illustrating the apparatus with an illumination module illustrated in Fig. 1A.
[Fig. 2A] Fig. 2A is a diagram illustrating another example of the apparatus with an illumination module.
[Fig. 2B] Fig. 2B is a diagram illustrating the apparatus with an illumination module illustrated in Fig. 2A.
[Fig. 3] Fig. 3 is a diagram illustrating still another example of the apparatus with an illumination module.
[Fig. 4] Fig. 4 is a diagram illustrating still another example of the apparatus with an illumination module.
[Fig. 5] Fig. 5 is a diagram illustrating still another example of the apparatus with an illumination module.
[Fig. 6A] Fig. 6A is a diagram illustrating an example of a block diagram of the apparatus with an illumination module illustrated in Fig. 1A to Fig. 5.
[Fig. 6B] Fig. 6B is a diagram illustrating another example of the block diagram of the apparatus with an illumination module illustrated in Fig. 1A to Fig. 5.
[Fig. 6C] Fig. 6C is a diagram illustrating still another example of the block diagram of the apparatus with an illumination module illustrated in Fig. 1A to Fig. 5.
[Fig. 6D] Fig. 6D is a diagram illustrating still another example of the block diagram of the apparatus with an illumination module illustrated in Fig. 1A to Fig. 5.
[Fig. 7A] Fig. 7A is a perspective view illustrating an example of an illumination module that may be incorporated in the apparatus with an illumination module illustrated in Fig. 1A to Fig. 5.
[Fig. 7B] Fig. 7B is a diagram illustrating the illumination module illustrated in Fig. 7A from a direction different from that in Fig. 7A.
[Fig. 8A] Fig. 8A is a diagram illustrating the illumination module illustrated in Fig. 7A from a direction different from that in Fig. 7A.
[Fig. 8B] Fig. 8B is a diagram illustrating the illumination module illustrated in Fig. 7A from a direction different from that in Fig. 7A.
[Fig. 9] Fig. 9 is a cross-sectional view illustrating an example of a first mode of the illumination module illustrated in Fig. 7A.
[Fig. 10] Fig. 10 is a cross-sectional view taken along line X-X in Fig. 9.
[Fig. 11] Fig. 11 is a partially enlarged view of Fig. 9.
[Fig. 12] Fig. 12 is a diagram corresponding to Fig. 9, and is a cross-sectional view illustrating another example of the first mode of the illumination module.
[Fig. 13] Fig. 13 is a diagram illustrating an example of a circuit board that may be included in the illumination module.
[Fig. 14] Fig. 14 is a diagram corresponding to Fig. 9, and is a cross-sectional view illustrating still another example of the first mode of the illumination module.
[Fig. 15] Fig. 15 is a cross-sectional view taken along line XV-XV in Fig. 14.
[Fig. 16] Fig. 16 is a cross-sectional view illustrating an example of a second mode of the illumination module illustrated in Fig. 7A.
[Fig. 17] Fig. 17 is a plan view illustrating the illumination module illustrated in Fig. 16 from a second side in an axial direction in a state in which a cover is removed.
[Fig. 18] Fig. 18 is a partially enlarged view of Fig. 16.
[Fig. 19] Fig. 19 is a diagram for explaining a modification of an illumination method, and is a perspective view illustrating an illumination system together with an illumination pattern observed on a projection surface.
[Fig. 20] Fig. 20 is a configuration diagram illustrating an example of the illumination system illustrated in Fig. 19.
[Fig. 21A] Fig. 21A is a plan view illustrating an example of projection patterns constituting the illumination pattern illustrated in Fig. 19.
[Fig. 21B] Fig. 21B is a plan view illustrating another example of the projection patterns constituting the illumination pattern illustrated in Fig. 19.
[Fig. 21C] Fig. 21C is a plan view illustrating still another example of the projection patterns constituting the illumination pattern illustrated in Fig. 19.
[Fig. 21D] Fig. 21D is a plan view illustrating still another example of the projection patterns constituting the illumination pattern illustrated in Fig. 19.
[Fig. 21E] Fig. 21E is a plan view illustrating still another example of the projection patterns constituting the illumination pattern illustrated in Fig. 19.
[Fig. 21F] Fig. 21F is a plan view illustrating still another example of the projection patterns constituting the illumination pattern illustrated in Fig. 19.
[Fig. 21G] Fig. 21G is a plan view illustrating still another example of the projection patterns constituting the illumination pattern illustrated in Fig. 19.
[Fig. 21H] Fig. 21H is a plan view illustrating still another example of the projection patterns constituting the illumination pattern illustrated in Fig. 19.
[Fig. 22A] Fig. 22A is a plan view illustrating an example of an arrangement of the illumination module unit.
[Fig. 22B] Fig. 22B is a plan view illustrating another example of the arrangement of the illumination module unit.
[Fig. 23] Fig. 23 is a side view illustrating the illumination system including the illumination module unit illustrated in Fig. 22A or Fig. 22B.
[Fig. 24A] Fig. 24A is a diagram for explaining a modification of the illumination pattern and the illumination system, and is a plan view illustrating the illumination system together with the illumination pattern observed on the projection surface.
[Fig. 24B] Fig. 24B is a diagram illustrating the illumination system illustrated in Fig. 24A, in which the illumination system displays an illumination pattern different from the illumination pattern illustrated in Fig. 24A.
[Fig. 24C] Fig. 24C is a diagram illustrating the illumination system illustrated in Fig. 24A, in which the illumination system displays an illumination pattern different from the illumination patterns illustrated in Fig. 24A and Fig. 24B.
[Fig. 25] Fig. 25 is a diagram for explaining another modification of the illumination pattern and the illumination system, and is a plan view illustrating the illumination system together with the illumination pattern observed on the projection surface.
[Fig. 26] Fig. 26 is a diagram illustrating a change in the illumination pattern displayed by the illumination system illustrated in Fig. 25.

### Description of Embodiments

The embodiment of the present disclosure relates to the following <1> to <60>.
<1>
   An illumination module that projects a projection pattern onto a projection surface, the illumination module including:
   a light source that emits light;
   an optical system that faces the light source in an axial direction of the illumination module;
   a case that holds the light source and the optical system; and
   a circuit board that is electrically connected to the light source,
   wherein, in the axial direction, the circuit board is positioned at least partially between the light source and an exit end of the optical system from which light emitted from the light source exits.
<2>
   The illumination module according to <1>, further including:
   an FPC that electrically connects the light source and the circuit board,
   in which the light source includes a terminal extending through the FPC, and
   in which the terminal is electrically connected to the FPC.
<3>
   The illumination module according to <1> or <2>, further including:
   an FPC that electrically connects the light source and the circuit board,
   in which the FPC is attached to the case.
<4>
   The illumination module according to any one of <1> to <3>,
   in which the case includes a tubular portion and a bottom portion connected to the tubular portion,
   in which the tubular portion is open on a first side in the axial direction and is connected to the bottom portion from a second side in the axial direction,
   in which the optical system is held inside the tubular portion, and
   in which the light source is held at the bottom portion.
<5>
   The illumination module according to <4>,
   in which the tubular portion includes a first tubular portion and a second tubular portion,
   in which the first tubular portion is positioned on the first side in the axial direction relative to the second tubular portion,
   in which the second tubular portion is narrower than the first tubular portion, and
   in which the circuit board is attached to an outer side of the second tubular portion.
<6>
   The illumination module according to any one of <1> to <5>,
   in which the circuit board includes a board, and an element and a wiring line that are provided on the board, and
   in which the board is oriented in a radial direction orthogonal to the axial direction.
<7>
   The illumination module according to any one of <1> to <6>, including:
   a second circuit board,
   in which the circuit board and the second circuit board are disposed apart from each other in a circumferential direction about an axis parallel to the axial direction.
<8>
   The illumination module according to <5>, in which the circuit board has an annular shape through which the second tubular portion extends.
<9>
   The illumination module according to <8>,
   in which the circuit board includes a board, and an element and a wiring line that are provided on the board, and
   in which the board is oriented in the axial direction.
<10>
   An illumination module that projects a projection pattern onto a projection surface, the illumination module including:
   a light source that emits light;
   an optical system that faces the light source in an axial direction of the illumination module;
   a case that holds the light source and the optical system; and
   a circuit board that is electrically connected to the light source,
   in which the circuit board includes a socket that is in contact with a terminal of the light source to be electrically connected to the terminal, and
   in which the light source is positioned between the circuit board and the optical system in the axial direction.
<11>
   The illumination module according to <10>, in which, in projection onto a plane orthogonal to the axial direction, the circuit board is positioned coincident with the case or inside the case.
<12>
   The illumination module according to <10> or <11>, including a second circuit board that is positioned at least partially between an exit end of the optical system and the light source in the axial direction.
<13>
   The illumination module according to <7> or <12>, in which the circuit board and the second circuit board are electrically connected using an FPC.
<14>
   The illumination module according to any one of <10> to <13>, in which a dislodgement suppression mechanism that suppresses detachment of the socket from the terminal is provided.
<15>
   The illumination module according to any one of <1> to <14>,
   in which the light source includes a laser diode, and
   in which the circuit board includes a driver IC that drives the laser diode.
<16>
   The illumination module according to <15>,
   in which the driver IC includes a plurality of channels connected in parallel, and
   in which each of the plurality of channels includes an element separately.
<17>
   The illumination module according to any one of <1> to <16>, in which the circuit board is in contact with the case.
<18>
   The illumination module according to any one of <1> to <17>, including:
   a cover that partially covers the case,
   in which the circuit board is positioned between the case and the cover, and
   in which the circuit board is in contact with the cover.
<19>
   The illumination module according to any one of <1> to <18>, including:
   a cover that partially covers the case,
   in which the circuit board is positioned between the case and the cover, and
   in which the illumination module is to be used by being incorporated in or attached to another apparatus, and
   in which the case and/or the cover is to be fixed to the apparatus.
<20>
   The illumination module according to any one of <1> to <19>, including:
   a cover that partially covers the case,
   in which the circuit board is positioned between the case and the cover,
   in which the illumination module is to be used by being incorporated in or attached to another apparatus,
   in which the cover includes a contact portion that contacts the apparatus, and
   in which the contact portion is to be positioned between the circuit board and the apparatus.
<21>
   The illumination module according to any one of <1> to <20>, including:
   a cover that partially covers the case,
   in which the circuit board is positioned between the case and the cover, and
   in which the case and/or the cover includes an indication that indicates an installation orientation.
<22>
   The illumination module according to any one of <1> to <21>, including:
   a cover that partially covers the case,
   in which the circuit board is positioned between the case and the cover,
   in which the cover includes an end portion that has a plate shape and that faces the case in the axial direction, and a side portion that has a tubular shape and that faces the case in a radial direction orthogonal to the axial direction.
<23>
   The illumination module according to <22>,
   in which the illumination module is to be used by being incorporated in or attached to another apparatus, and
   in which a connection connector for electrical connection to the apparatus is provided at a position offset from a center of the end portion.
<24>
   The illumination module according to any one of <1> to <23>, including:
   a cover that partially covers the case,
   in which the circuit board is positioned between the case and the cover, and
   in which, in projection onto a plane orthogonal to the axial direction, the cover is positioned coincident with the case or inside the case.
<25>
   The illumination module according to any one of <1> to <24>, including:
   a cover that partially covers the case,
   in which the circuit board is positioned between the case and the cover, and
   in which the cover has a circular contour in projection onto a plane orthogonal to the axial direction.
<26>
   The illumination module according to any one of <1> to <25>, including:
   a cover that partially covers the case,
   in which the circuit board is positioned between the case and the cover, and
   in which the cover has a circular contour in projection onto a plane orthogonal to the axial direction.
<27>
   The illumination module according to any one of <1> to <26>, in which the optical system includes a diffractive optical element and a lens optical system.
<28>
   The illumination module according to any one of <1> to <27>, in which the optical system includes a light-shielding mask and an image-forming optical system.
<29>
   An apparatus with an illumination module including:
   the illumination module according to any one of <1> to <28>; and
   an apparatus in which the illumination module is incorporated or to which the illumination module is attached.
<30>
   An illumination module unit including:
   a plurality of the illumination modules according to any one of <1> to <28>,
   in which an illumination pattern is displayed on a projection surface by a plurality of projection patterns projected onto the projection surface from respective ones of the plurality of the illumination modules.
<31>
   An illumination module unit including:
   a plurality of illumination modules,
   in which an illumination pattern is displayed on a projection surface by a plurality of projection patterns projected onto the projection surface from respective ones of the plurality of illumination modules.
<32>
   The illumination module unit according to <30> or <31>,
   in which the plurality of projection patterns are arranged in a fourth direction, and
   in which each of the plurality of projection patterns extends in a fifth direction non-parallel to the fourth direction.
<33>
   An illumination module unit including:
   a plurality of the illumination modules according to any one of <1> to <28>,
   in which a plurality of projection patterns projected onto the projection surface from respective ones of the plurality of the illumination modules are arranged in a fourth direction, and
   in which each of the plurality of projection patterns extends in a fifth direction non-parallel to the fourth direction.
<34>
   An illumination module unit including:
   a plurality of illumination modules,
   in which a plurality of projection patterns projected onto a projection surface from respective ones of the plurality of illumination modules are arranged in a fourth direction, and
   in which each of the plurality of projection patterns extends in a fifth direction non-parallel to the fourth direction.
<35>
   The illumination module unit according to any one of <30> to <34>, in which each of the plurality of projection patterns has a line shape.
<36>
   The illumination module unit according to any one of <32> to <34>, in which, on the projection surface, the plurality of projection patterns are spaced apart from each other in the fourth direction.
<37> The illumination module unit according to any one of <32> to <34> and <36>,
   in which the plurality of projection patterns include a first outermost projection pattern, a second outermost projection pattern, and an intermediate projection pattern,
   in which the first outermost projection pattern is positioned closest to a first side in the fourth direction,
   in which the second outermost projection pattern is positioned closest to a second side in the fourth direction,
   in which the intermediate projection pattern is positioned between the first outermost projection pattern and the second outermost projection pattern in the fourth direction, and
   in which, at a certain position in the fifth direction, the first outermost projection pattern is brighter than the intermediate projection pattern, and the second outermost projection pattern is brighter than the intermediate projection pattern.
<38>
   The illumination module unit according to any one of <32> to <34>, <36>, and <37>,
   in which the plurality of projection patterns include a first outermost projection pattern and a second outermost projection pattern,
   in which the first outermost projection pattern is positioned closest to a first side in the fourth direction,
   in which the second outermost projection pattern is positioned closest to a second side in the fourth direction,
   in which, at a certain position in the fifth direction, the first outermost projection pattern is brighter than another projection pattern other than the second outermost projection pattern, and
   in which, at a certain position in the fifth direction, the second outermost projection pattern is brighter than another projection pattern other than the first outermost projection pattern.
<39>
   The illumination module unit according to any one of <30> to <38>,
   in which each of the plurality of illumination modules includes a light source and an optical system that adjusts an optical path of light from the light source, and
   in which the light source includes a laser diode.
<40>
   The illumination module unit according to any one of <30> to <39>,
   in which each of the plurality of illumination modules includes a light source and an optical system that adjusts an optical path of light from the light source, and
   in which the optical system includes one or more of a diffractive optical element, a microlens array, a light diffusion element, a phosphor, and a spatial light modulator.
<41>
   The illumination module unit according to any one of <32> to <34>, <36>, <37>, and <38>, in which one or more illumination modules included in the plurality of illumination modules and one or more other illumination modules included in the plurality of illumination modules are positioned opposite each other in the fifth direction.
<42>
   The illumination module unit according to any one of <30> to <41>, in which the plurality of illumination modules are positioned at mutually different positions.
<43>
   The illumination module unit according to any one of <30> to <42>, in which the plurality of projection patterns are identical to each other.
<44>
   The illumination module unit according to any one of <30> to <43>, in which the plurality of projection patterns are different from each other.
<45>
   An illumination system including:
   the illumination module unit according to any one of <30> to <44>;
   a power source that supplies power to the plurality of illumination modules; and
   a plurality of controllers positioned between the plurality of illumination modules and the power source,
   in which each of the plurality of controllers adjusts power supply from the power source to a corresponding illumination module included in the plurality of illumination modules, independently of power supply from the power source to another illumination module included in the plurality of illumination modules.
<46>
   The illumination system according to <45>, in which each of the plurality of controllers adjusts presence or absence of power supply and/or an amount of power supply to the corresponding illumination module.
<47>
   An illumination method including:
   illuminating a projection surface by using the illumination module unit according to any one of <30> to <44>,
   in which, in the illuminating, the illumination pattern is displayed on the projection surface by the plurality of projection patterns projected onto the projection surface from the illumination module unit.
<48>
   An illumination method including:
   illuminating a projection surface by using an illumination module unit,
   in which, in the illuminating, an illumination pattern is displayed on the projection surface by a plurality of projection patterns projected onto the projection surface from the illumination module unit.
<49>
   The illumination method according to <47> or <48>,
   in which the plurality of projection patterns are arranged in a fourth direction, and
   in which each of the plurality of projection patterns extends in a fifth direction non-parallel to the fourth direction.
<50>
   An illumination method including:
   illuminating a projection surface by using the illumination module unit according to any one of <30> to <44>,
   in which, in the illuminating, the plurality of projection patterns are projected from the illumination module unit onto the projection surface,
   in which the plurality of projection patterns are arranged in a fourth direction, and
   in which each of the plurality of projection patterns extends in a fifth direction non-parallel to the fourth direction.
<51>
   An illumination method including:
   illuminating a projection surface by using an illumination module unit,
   in which, in the illuminating, a plurality of projection patterns are projected from the illumination module unit onto the projection surface,
   in which the plurality of projection patterns are arranged in a fourth direction, and
   in which each of the plurality of projection patterns extends in a fifth direction non-parallel to the fourth direction.
<52>
   The illumination method according to any one of <47> to <51>, in which each of the plurality of projection patterns has a line shape.
<53>
   The illumination method according to any one of <49> to <51>, in which, on the projection surface, the plurality of projection patterns are spaced apart from each other in the fourth direction.
<54>
   The illumination method according to any one of <49> to <51> and <53>, in which, in the illuminating, a thickness and/or brightness of the illumination pattern is controlled by adjusting the number of the plurality of projection patterns.
<55>
   The illumination method according to any one of <49> to <51>, <53>, and <54>, in which, in the illuminating, one or more projection patterns included in the plurality of projection patterns are caused to blink.
<56>
   The illumination method according to <55>,
   in which, while the one or more projection patterns are caused to blink, one or more other projection patterns included in the plurality of projection patterns are turned on, and
   in which the one or more other projection patterns include a projection pattern positioned on a first side in the fourth direction relative to the one or more projection patterns, and a projection pattern positioned on a second side in the fourth direction relative to the one or more projection patterns.
<57>
   The illumination method according to any one of <49> to <51> and <53> to <56>,
   in which the plurality of projection patterns include a first outermost projection pattern, a second outermost projection pattern, and an intermediate projection pattern,
   in which the first outermost projection pattern is positioned closest to a first side in the fourth direction,
   in which the second outermost projection pattern is positioned closest to a second side in the fourth direction,
   in which the intermediate projection pattern is positioned between the first outermost projection pattern and the second outermost projection pattern in the fourth direction, and
   in which, at a certain position in the fifth direction, the first outermost projection pattern is brighter than the intermediate projection pattern, and the second outermost projection pattern is brighter than the intermediate projection pattern.
<58>
   The illumination method according to any one of <49> to <51> and <53> to <57>,
   in which the plurality of projection patterns include a first outermost projection pattern and a second outermost projection pattern,
   in which the first outermost projection pattern is positioned closest to a first side in the fourth direction,
   in which the second outermost projection pattern is positioned closest to a second side in the fourth direction,
   in which, at a certain position in the fifth direction, the first outermost projection pattern is brighter than another projection pattern other than the second outermost projection pattern, and
   in which, at a certain position in the fifth direction, the second outermost projection pattern is brighter than another projection pattern other than the first outermost projection pattern.
<59>
   The illumination method according to any one of <49> to <51> and <53> to <58>, in which one or more projection patterns included in the plurality of projection patterns and one or more other projection patterns included in the plurality of projection patterns are projected onto the projection surface from positions opposite each other in the fifth direction.
<60>
   The illumination method according to any one of <49> to <51> and <53> to <59>, in which one or more projection patterns included in the plurality of projection patterns are projected onto the projection surface from two or more positions opposite each other in the fifth direction.

Details of the embodiment of the present disclosure will be described below. In the drawings attached to the present description, for ease of understanding, scales, aspect ratios, and the like are changed or exaggerated, as appropriate, from those of actual objects. In some drawings, configurations and the like illustrated in the other drawings may be omitted. Scales, aspect ratios, and the like may differ among the drawings.

In the present description, terms such as "plate (board)", "sheet", and "film" are not distinguished from each other solely based on differences in designation.

In the present description, a normal direction of a plate-like (sheet-like, film-like) member refers to a direction parallel to a normal line or a perpendicular line to a plate surface (sheet surface, film surface) of a target plate-like (sheet-like, film-like) member. The term "plate surface (sheet surface, film surface)" refers to a surface that coincides with a target plate-like (sheet-like, film-like) member when the target plate-like (sheet-like, film-like) member is viewed as a whole and in a global manner.

In the present description, a plurality of candidates for an upper limit value relating to a numerical range and a plurality of candidates for a lower limit value relating to the numerical range may be described in separate sentences. In these descriptions, the numerical range may be constituted by combining any one candidate for the upper limit value and any one candidate for the lower limit value. As an example, a description "A parameter B may be not less than A1, may be not less than A2, or may be not less than A3. The parameter B may be not more than A4, may be not more than A5, or may be not more than A6." is considered. In this example, the numerical range of the parameter B may be not less than A1 and not more than A4, may be not less than A1 and not more than A5, may be not less than A1 and not more than A6, may be not less than A2 and not more than A4, may be not less than A2 and not more than A5, may be not less than A2 and not more than A6, may be not less than A3 and not more than A4, may be not less than A3 and not more than A5, or may be not less than A3 and not more than A6.

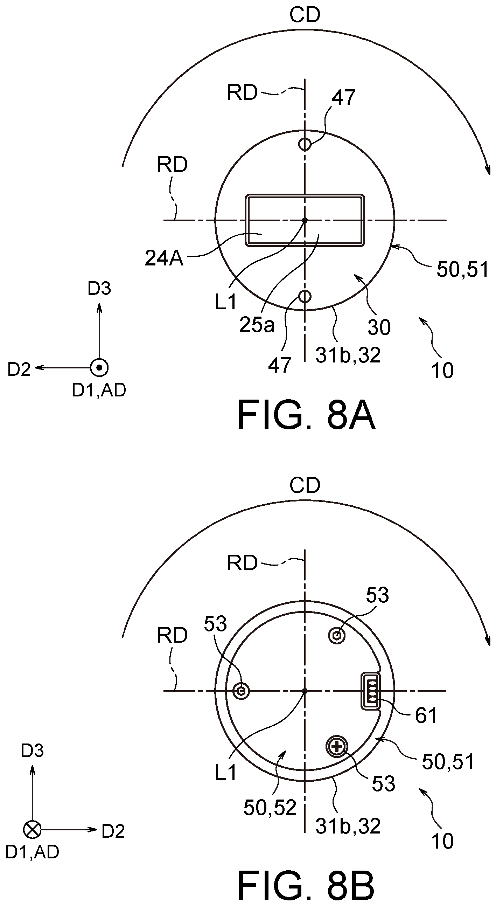

An axial direction AD, a circumferential direction CD, and first to sixth directions D1 to D6 that are common among some drawings are indicated by arrows provided with common reference signs in each drawing. The axial direction AD, the circumferential direction CD, and the first to third directions D1 to D3 are defined with reference to an illumination module 10. The fourth to sixth directions D4 to D6 are defined with reference to the illumination module 10. In each direction, the tip end side of an arrow is a first side. In each direction, a side opposite to the first side, that is, the base end side of the arrow, is a second side. An arrow extending from the back side toward the front side of paper along a direction orthogonal to the sheet of a drawing is indicated by a symbol having a dot in a circle, for example, as illustrated in Fig. 8A. An arrow extending from the front side toward the back side of paper along the direction orthogonal to the sheet of a drawing is indicated by a symbol having an X in a circle, for example, as illustrated in Fig. 8B.

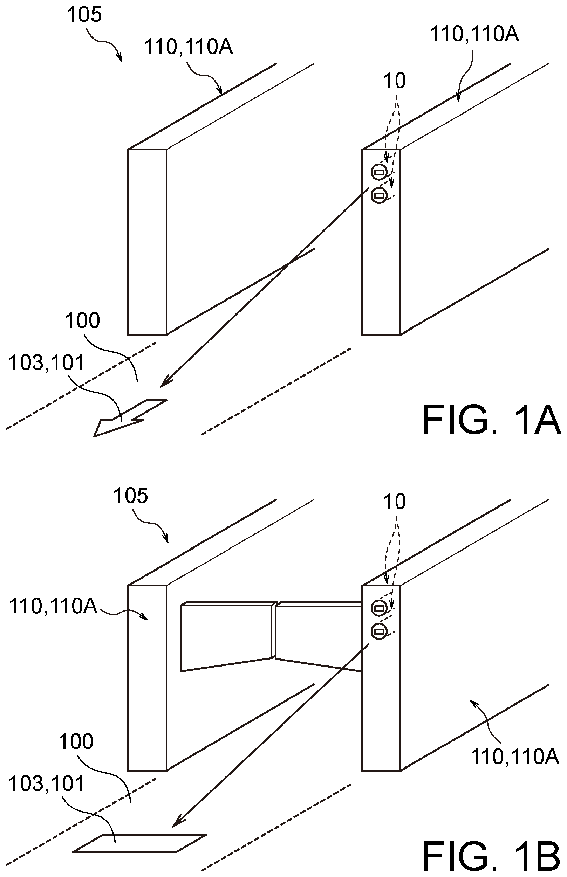

Fig. 1A to Fig. 6D are diagrams illustrating several specific examples of an apparatus with an illumination module 105 according to the present embodiment. As illustrated in Fig. 1A to Fig. 6D, the apparatus with an illumination module 105 includes an apparatus 110 and an illumination module 10. The illumination module 10 may be incorporated in the apparatus 110. The illumination module 10 may be built in the apparatus 110. The illumination module 10 may be attached to the apparatus 110. The illumination module 10 projects a projection pattern 101 onto a projection surface 100. The illumination module 10 emits projection light L constituting the projection pattern 101.

According to the present embodiment, as described below, the illumination module 10 is provided with a configuration suitable for being incorporated in or attached to the apparatus 110. More specifically, the illumination module 10 can be reduced in size. Accordingly, a degree of freedom in a method of incorporating the illumination module 10 in the apparatus 110 or in a method of attaching the illumination module 10 to the apparatus 110 is increased. In addition, a circuit board 70A included in the illumination module 10 can be protected by a cover 60 from physical contact and collision. Furthermore, the circuit board 70A included in the illumination module 10 can be electromagnetically shielded by the cover 60. Accordingly, reliability of operation of the illumination module 10 can be improved.

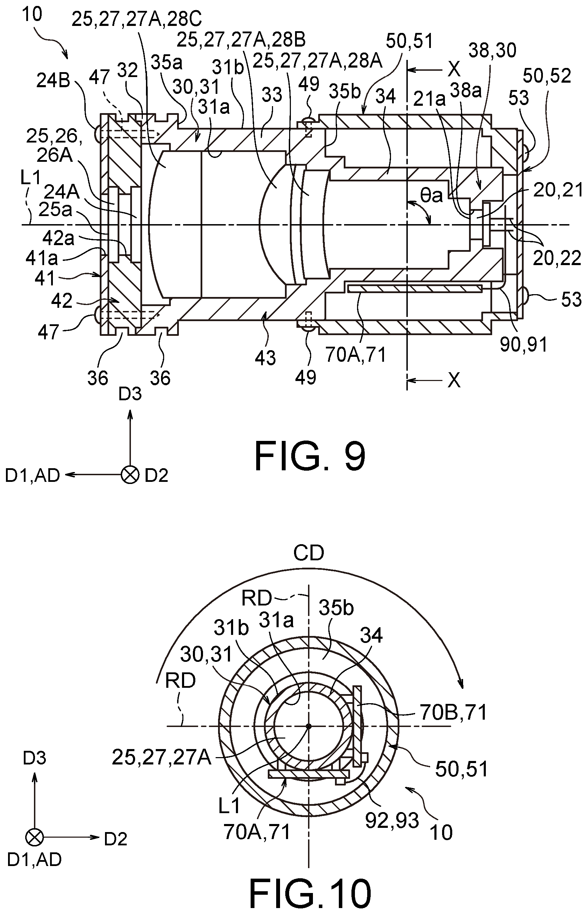

As illustrated in Fig. 9 to Fig. 18, the illumination module 10 may include a single circuit board 70A, or may include a plurality of circuit boards 70A and 70B. When the illumination module 10 includes a plurality of circuit boards as illustrated in Fig. 10, Fig. 14, Fig. 16, Fig. 18, and the like, the circuit board 70A may be referred to as the first circuit board 70A.

The apparatus 110 is not particularly limited. The apparatus 110 may have a function or an effect related to the projection pattern 101 projected by the illumination module 10. The apparatus 110 may exert a function or an effect on the projection surface 100. The apparatus 110 may be a security gate 110A, an illumination apparatus 110B, a display apparatus 110C, a mobile body 110D, or a detection apparatus 110E. The mobile body 110D may be capable of unmanned operation. The mobile body 110D may be capable of manned operation. Examples of the mobile body 110D include a ship, an airplane, a drone, a railway vehicle, and an automobile.

The projection surface 100 is not particularly limited. The projection surface 100 may be a surface on which the apparatus 110 exerts a function or an effect. The projection surface 100 may be a surface around a portion on which the apparatus 110 exerts a function or an effect. Examples of the projection surface 100 include a surface of a structure, a road surface, a parking lot for a mobile body, a water surface, a ground surface, and a surface of an apparatus. The surface of the structure may be an outer wall surface or a rooftop. Examples of the surface of the structure include a floor surface, a wall surface, and a ceiling. The structure is not particularly limited. The structure may be a school, a company, a factory, an assembly hall, an auditorium, a gymnasium, a stadium, a venue, or the like.

The projection pattern 101 is not particularly limited. The projection pattern 101 may be various patterns. The projection pattern 101 may be a pattern related to a function or an effect of the apparatus 110. The projection pattern 101 may be a pattern indicating information. The projection pattern 101 may be one pattern or a plurality of patterns. The projection pattern 101 may include a pattern representing one or more of a letter, a design, a color pattern, a symbol, a mark, a line, an illustration, a character image, and a pictogram. The line may be a straight line, may be a curved line, or may be a combination of a straight line and a curved line. The line may be a dotted line.

In the example illustrated in Fig. 1A and Fig. 1B, the apparatus 110 is the security gate 110A. The security gate 110A includes a state in which passage is permitted as illustrated in Fig. 1A and a state in which passage is restricted as illustrated in Fig. 1B. The security gate 110A may permit passage based on an ID card or the like.

In the illustrated example, two illumination modules 10 are incorporated in the security gate 110A. In this example, the projection surface 100 is a ground surface or a floor surface on which a pedestrian passes after passing through the security gate 110A. The illumination module 10 displays the projection pattern 101 corresponding to an authentication result of the security gate 110A. In the state in which passage is permitted as illustrated in Fig. 1A, the illumination module 10 projects, as the projection pattern 101, an arrow mark onto the projection surface 100. The arrow mark promotes a pedestrian to pass. In the state in which passage is restricted as illustrated in Fig. 1B, the illumination module 10 projects, as the projection pattern 101, a restriction line mark prompting a pedestrian to stop moving onto the projection surface 100.

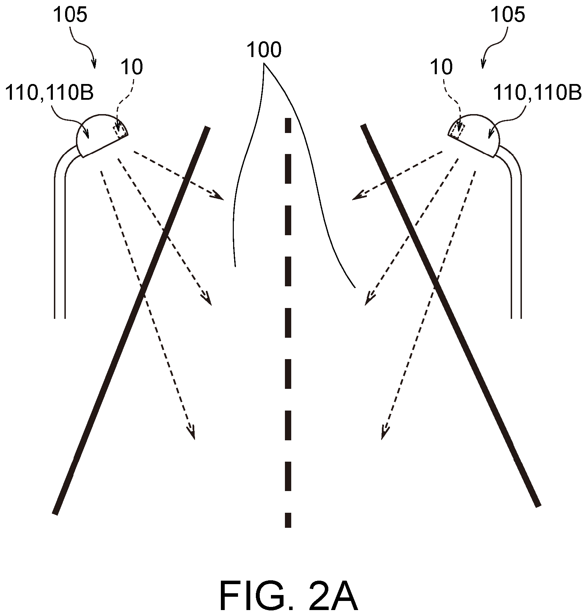

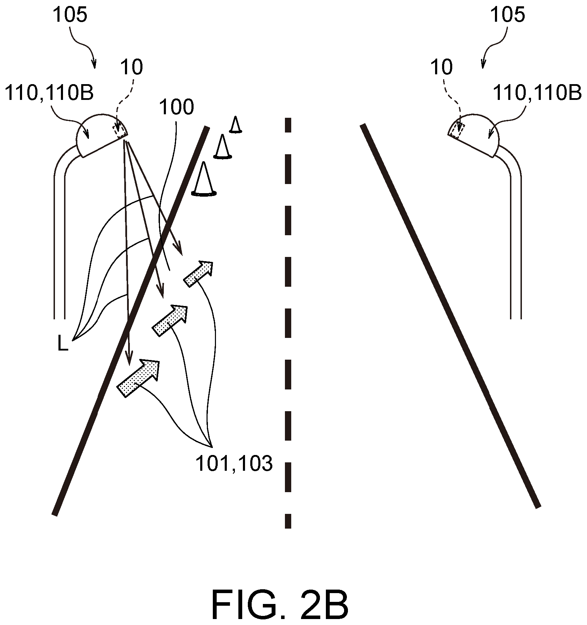

In the example illustrated in Fig. 2A and Fig. 2B, the apparatus 110 is an illumination apparatus. The illumination module 10 is incorporated in the illumination apparatus 110B. As illustrated in Fig. 2A, the illumination apparatus illuminates a road. In this example, the projection surface 100 is a surface of the road illuminated by the illumination apparatus 110B, that is, a road surface. In the example illustrated in Fig. 2B, an obstruction that hinders traveling is present on the road. In the illustrated example, road construction is being carried out. As illustrated in Fig. 2B, the illumination module 10 may project, as the projection pattern 101, an arrow mark prompting a lane change onto the projection surface 100.

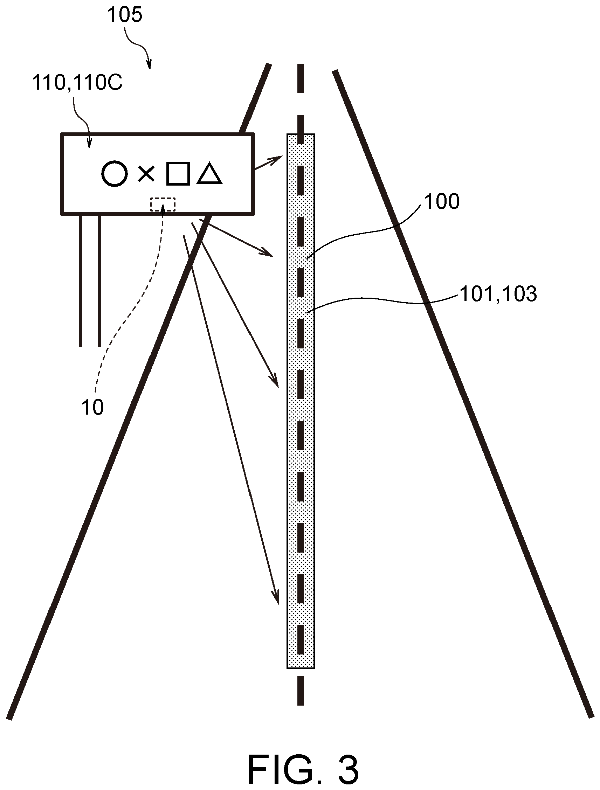

In the example illustrated in Fig. 3, the apparatus 110 is the display apparatus 110C. A use of the display apparatus 110C is not particularly limited. The illumination module 10 is incorporated in the display apparatus 110C. In the example illustrated in Fig. 3, the display apparatus 110C may provide a display for a driver of an automobile traveling on a road. In this example, the projection surface 100 is the road surface. In the example illustrated in Fig. 3, the illumination module 10 provides a display indicating a center separation line to call the driver's attention. The illumination module 10 may project a linear pattern as the projection pattern 101 onto the projection surface 100.

In the examples illustrated in Fig. 2A to Fig. 3 in each of which the surface on which a mobile body travels is the projection surface 100, the illumination module 10 may project the projection pattern 101 indicating traveling conditions such as a speed limit onto the projection surface 100. The illumination module 10 may project a linear mark, which is useful for measuring an inter-vehicle distance, as the projection pattern 101 onto the projection surface 100.

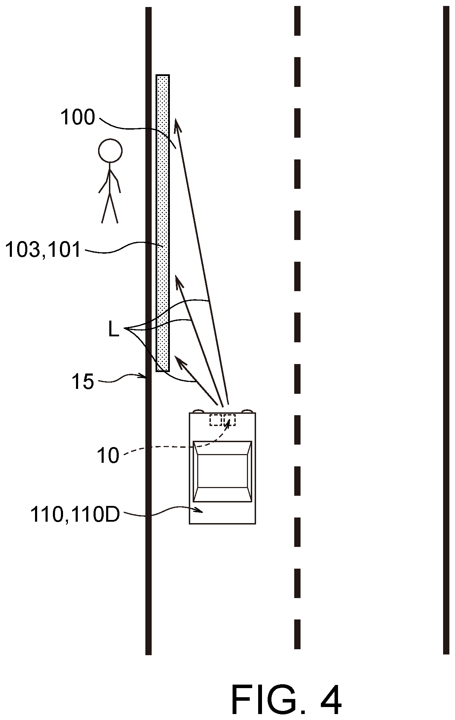

In the example illustrated in Fig. 4, the apparatus 110 may be the mobile body 110D. The illumination module 10 is incorporated in the mobile body 110D. The mobile body 110D illustrated in Fig. 4 is an automobile. In the example illustrated in Fig. 4, the illumination module 10 may provide a display for pedestrians passing by the road. In this example, the projection surface 100 is the road surface. In the example illustrated in Fig. 4, the illumination module 10 provides a display notifying approach of the automobile to call pedestrians' attention. The illumination module 10 may project a linear pattern as the projection pattern 101 onto the projection surface 100.

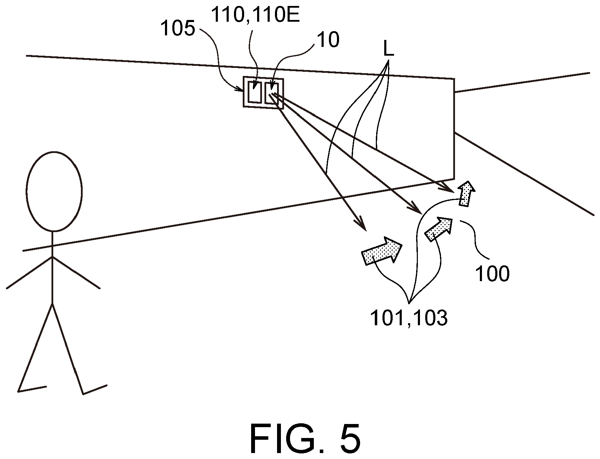

In the example illustrated in Fig. 5, the apparatus 110 may be the detection apparatus 110E such as a sensor. The illumination module 10 is incorporated in the detection apparatus 110E. In the example illustrated in Fig. 5, the detection apparatus 110E can detect approach of a person or presence of a person. The detection apparatus 110E may include a camera. In the example illustrated in Fig. 5, the illumination module 10 may provide a display for a person detected by the detection apparatus 110E. In this example, the projection surface 100 may be a ground surface at a place where the detection apparatus 110E is installed, or may be a wall surface, a floor surface, a ceiling, or the like of a building in which the detection apparatus 110E is installed. In the example illustrated in Fig. 5, the illumination module 10 provides a display for guiding the person detected by the detection apparatus 110E. The illumination module 10 may project, as the projection pattern 101, an arrow mark indicating a movement route onto a floor surface as the projection surface 100.

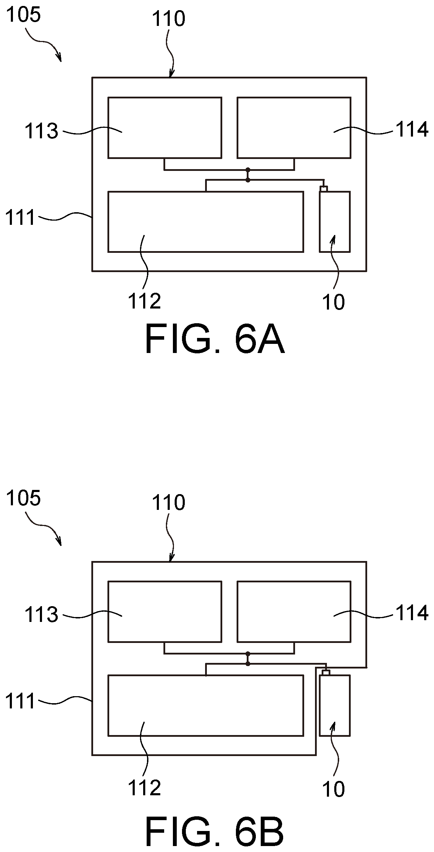

Fig. 6A to Fig. 6D illustrate block diagrams of the apparatus 105 with an illumination module.

As illustrated in Fig. 6A and Fig. 6B, the apparatus 105 with an illumination module includes the illumination module 10 and the apparatus 110. The illumination module 10 may be incorporated in the apparatus 110 as illustrated in Fig. 6A. The illumination module 10 may be attached to the apparatus 110 as illustrated in Fig. 6B.

As illustrated in Fig. 6A and Fig. 6B, the apparatus 110 may include a housing 111, equipment 112, a power supply unit 113, and a control unit 114. The equipment 112, the power supply unit 113, and the control unit 114 may be accommodated in the housing 111. The equipment 112 is supplied with power from the power supply unit 113. The equipment 112 operates under control by the control unit 114. The control unit 114 may include an interface for accepting manual operation.

In the example illustrated in Fig. 6A and Fig. 6B, the illumination module 10 may be electrically connected to the power supply unit 113 and the control unit 114. The illumination module 10 may be supplied with power from the power supply unit 113. Operation of the illumination module 10 may be controlled by the control unit 114. The illumination module 10 may receive an input signal from the control unit 114 and project the projection pattern 101 onto the projection surface 100 corresponding to the input signal.

Since the illumination module 10 does not have a dedicated power supply unit, the illumination module 10 can be reduced in size. Since the illumination module 10 does not have a dedicated power supply unit, the illumination module 10 can be reduced in weight.

The illumination module 10 reduced in size and weight can be applied to various apparatuses. The illumination module 10 having no dedicated control unit can also be applied to applications for unmanned use that do not require manual operation. As a result, an application range of the illumination module 10 can be greatly expanded.

As illustrated in Fig. 6A, the illumination module 10 incorporated in the apparatus 110 may have a part or an entirety thereof accommodated in the housing 111. In the example illustrated in Fig. 6A, the entirety of the illumination module 10 may be disposed in an empty space in the housing 111. The illumination module 10 is preferably reduced in size. In addition, the equipment 112, the power supply unit 113, and the control unit 114 are positioned in the vicinity of the illumination module 10. The circuit board 70A of the illumination module 10, which will be described later, is preferably shielded from electromagnetic noise from these components.

In the example illustrated in Fig. 6B, the illumination module 10 is not disposed in the housing 111. The illumination module 10 is positioned outside the housing 111 and is attached to the housing 111. Also in the example illustrated in Fig. 6B, the illumination module 10 is preferably reduced in size. The circuit board 70A of the illumination module 10 is preferably shielded from electromagnetic noise.

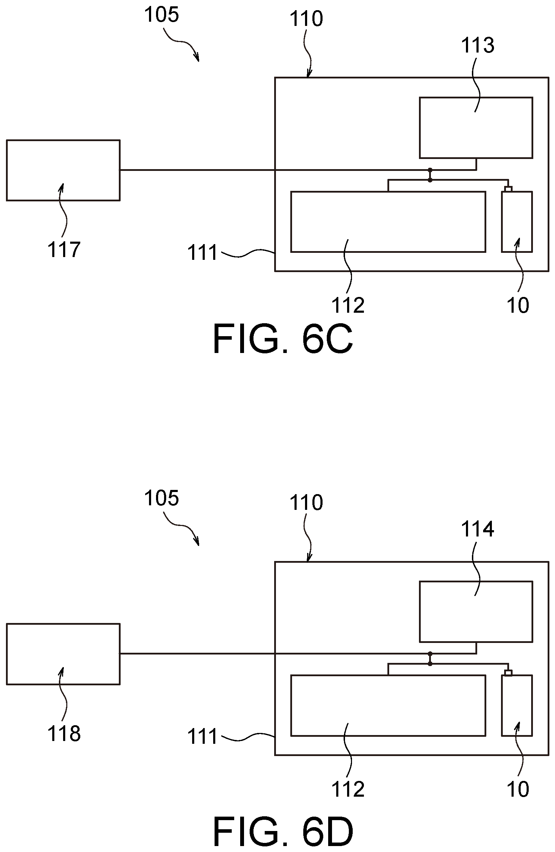

The apparatus 105 with an illumination module illustrated in Fig. 6C includes a control device 117 in addition to the illumination module 10 and the apparatus 110. In the example illustrated in Fig. 6C, the apparatus 110 may not include the control unit 114. The control device 117 may be positioned away from the apparatus 110. The control device 117 may be electrically connected to the apparatus 110 and the illumination module 10 by wire or wirelessly. The control device 117 may have an interface for accepting manual operation. Operation of the apparatus 110 and the illumination module 10 may be controlled by the control device 117. Also in the example illustrated in Fig. 6C, the illumination module 10 is preferably reduced in size. The circuit board 70A of the illumination module 10 is preferably shielded from electromagnetic noise.

The apparatus 105 with the illumination module illustrated in Fig. 6D includes a power supply device 118 in addition to the illumination module 10 and the apparatus 110. In the example illustrated in Fig. 6D, the apparatus 110 may not include the power supply unit 113. The apparatus 110 and the illumination module 10 may be supplied with power from the power supply device 118. The power supply device 118 may be positioned away from the apparatus 110. The power supply device 118 may be electrically connected to the apparatus 110 and the illumination module 10 by wire or wirelessly. Also in this example, the illumination module 10 is preferably reduced in size. The circuit board 70A of the illumination module 10 is preferably shielded from electromagnetic noise.

In the examples illustrated in Fig. 6C and Fig. 6D, the illumination module 10 may be positioned outside the housing 111 and attached to the housing 111.

Unlike the examples illustrated in Fig. 6A and Fig. 6B, the apparatus 105 with an illumination module may include the control device 117 and the power supply device 118 in addition to the illumination module 10 and the apparatus 110. In this example, the apparatus 110 may not include the power supply unit 113. The apparatus 110 may not include the control unit 114. The apparatus 110 and the illumination module 10 may be supplied with power from the power supply device 118. Operation of the apparatus 110 and the illumination module 10 may be controlled by the control device 117.

Next, the illumination module 10 will be described.

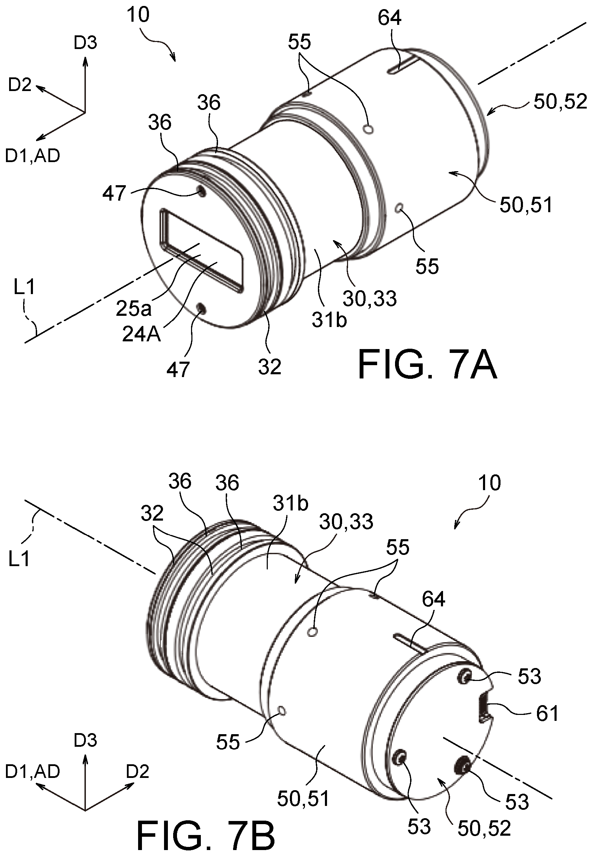

As illustrated in Fig. 7A and Fig. 7B, the illumination module 10 as a whole may have a generally cylindrical shape. In the example illustrated in Fig. 7A and Fig. 7B, the illumination module 10 includes a central axis L1. The central axis L1 extends from the light source 20 toward an exit end 25a of an optical system 25, which will be described later. The central axis L1 passes through a center of the illumination module 10 having the generally cylindrical shape. The illumination module 10 may have a rotationally symmetric shape about the central axis L1. As illustrated in Fig. 8A and Fig. 8B, in projection onto a plane orthogonal to the axial direction AD, an outer edge of the illumination module 10 may have a circular shape.

The axial direction AD is a direction parallel to the central axis of the illumination module 10.

In the illustrated example, a first direction D1 is parallel to the axial direction AD. A second direction D2 and a third direction D3 are orthogonal to the first direction D1. The second direction D2 and the third direction D3 are each a radial direction RD orthogonal to the axial direction AD. The second direction D2 and the third direction D3 are orthogonal to each other.

As illustrated in Fig. 9 to Fig. 11, the illumination module 10 includes the light source 20, the optical system 25, a case 30, a cover 50, and the circuit board 70A.

The light source 20 emits light. The light source 20 emits light when supplied with power. The light source 20 may be a device, member, apparatus, or the like capable of emitting light. The light source 20 is not particularly limited. The light source 20 may include a light-emitting diode, also referred to as an LED. The light source 20 may emit coherent light. Coherent light is light having aligned wavelengths and phases. As in the illustrated example, the light source 20 may include a laser diode, also referred to as an LD.

In the illustrated example, the light source 20 includes a light-emitting portion 21 and a terminal 22. The light source 20 may be supplied, at the terminal 22, with power from outside. The light source 20 may receive, at the terminal 22, an input signal. The terminal 22 may be a lead wire. As in the illustrated example, the terminal 22 may be a pin protruding from the light-emitting portion 21. The light-emitting portion 21 of the light source 20 that is a laser diode may be a semiconductor. The light-emitting portion 21 may include a light-emitting surface 21a that emits light. The terminal 22 is connected to a surface of the light-emitting portion 21 that faces a side opposite to the light-emitting surface 21a.

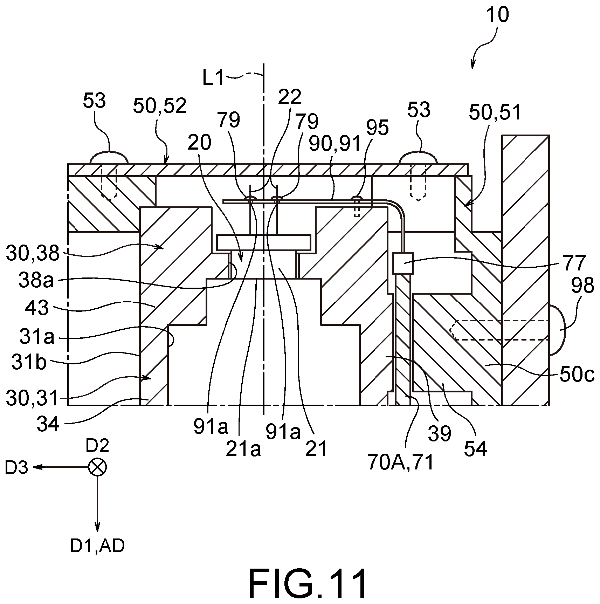

As illustrated in Fig. 9 and Fig. 11, in the illustrated example, the light source 20 is positioned on the central axis L1. The light-emitting surface 21a faces the first side in the axial direction AD. In the illustrated example, the terminal 22 extends from the light-emitting portion 21 toward the second side in the axial direction AD.

The optical system 25 acts on light emitted from the light source 20. The optical system 25 adjusts a path of light emitted from the light source 20. The optical system 25 generates projection light incident on an illuminated region of the projection surface 100. The optical system 25 shapes light from the light source 20 to generate projection light L. The illuminated region irradiated with projection light is observed by an observer as the projection pattern 101. The optical system 25 emits projection light L from the exit end 25a thereof. The optical system 25 faces the light source 20 in the first direction D1. The optical system 25 is positioned on a downstream side along an optical path of light emitted from the light source 20. The exit end 25a constitutes a light exit surface of the optical system 25. The exit end 25a is positioned at the most downstream side of the optical system 25 along the optical path of light emitted from the light source 20. In the illustrated example, the exit end 25a constitutes a light exit surface of the illumination module 10. The exit end 25a is positioned at the most downstream side of the illumination module 10 along the optical path of light emitted from the light source 20. The optical system 25 may be positioned on the central axis L1. The exit end 25a is positioned at the most downstream side in the optical system 25 along the optical path of light from the light source 20. The exit end 25a may be positioned on the central axis L1.

The optical system 25 may include a pattern optical system 26 and a lens system 27. The pattern optical system 26 shapes light from the light source 20 in accordance with a desired projection pattern 101. For example, the pattern optical system 26 may include a diffractive optical element (Diffractive Optical Element) 26A. The lens system 27 has lens functions such as image formation and projection. The lens system 27 may include a single lens or may include a plurality of lenses. The plurality of lenses may be arranged in the axial direction AD. An optical axis of a lens included in the lens system 27 may be parallel to the axial direction AD. As illustrated, the optical axis of a lens included in the lens system 27 may be positioned on the central axis L1.

In the example illustrated in Fig. 9 and Fig. 11, the lens system 27 transforms light emitted from the light source 20 into a widened parallel light beam. That is, the lens system 27 functions as a collimator optical system 27A. For example, the lens system 27 may include a first lens 28A, a second lens 28B, and a third lens 28C that are disposed along the optical path of light from the light source 20. The first lens 28A, the second lens 28B, and the third lens 28C may be disposed in this order from the second side toward the first side in the axial direction AD. For example, the first lens 28A may transform coherent light into a divergent light beam, the second lens 28B may adjust the divergent light beam, and the third lens 28C may transform the divergent light beam back into a parallel light beam.

The diffractive optical element 26A is an element that exerts a diffraction effect on light emitted from the light source 20. The diffractive optical element 26A diffracts light from the light source 20 to generate projection light L. Projection light L is directed toward an illuminated region 103 on the projection surface 100. When Projection light L is incident on the illuminated region 103, the projection pattern 101 is displayed on the projection surface 100.

The diffractive optical element (Diffractive Optical Element) 26A may include a hologram element. The hologram element is a holographic optical element (HOE: Holographic Optical Element). A hologram element may be used as the diffractive optical element 26A. By using the hologram element as the diffractive optical element, diffraction characteristics of the diffractive optical element 26A are made easier to design. A hologram element capable of causing light to irradiate only an entire desired region having a predetermined position on the projection surface 100, a predetermined contour shape, a predetermined size, and a predetermined orientation can be designed relatively easily. The diffractive optical element 26A may be a computer generated hologram (CGH: Computer Generated Hologram). The computer generated hologram is produced by calculating, on a computer, a structure having arbitrary diffraction characteristics.

The diffractive optical element 26A may include a plurality of elementary diffractive optical elements. Each of the elementary diffractive optical elements is, for example, a hologram element, and can be configured similarly to the diffractive optical element 26A described above. Coherent light diffracted by the plurality of elementary diffractive optical elements is configured to irradiate the same illuminated region 103. That is, light diffracted by each elementary diffractive optical element irradiates the entire illuminated region on the projection surface 100. According to such a diffractive optical element, light traveling toward each position within the illuminated region can be emitted in a dispersed manner from the plurality of elementary diffractive optical elements included in the diffractive optical element 26A. This suppresses excessively bright positions on the diffractive optical element 26A, and allows the diffractive optical element 26A to be observed as being uniformly bright. In addition, when laser light is incident on the diffractive optical element 26A, laser safety can be improved.

Each elementary diffractive optical element may be configured to have the same diffraction characteristics as each other. However, in order to achieve higher-accuracy irradiation, each elementary diffractive optical element may be individually provided with diffraction characteristics designed separately in accordance with an arrangement position of the elementary diffractive optical element within the diffractive optical element 26A. According to this example, each elementary diffractive optical element can direct diffracted light with high accuracy only to the entire illuminated region on the projection surface 100 by adjusting the diffraction characteristics according to differences in arrangement relative to other elementary diffractive optical elements.

According to the example illustrated in Fig. 9 and Fig. 11, projection light L can be projected with high accuracy onto the illuminated region 103 on the projection surface 100 by the collimator optical system 27A and the diffractive optical element 26A. Thus, the projection pattern 101 having a desired shape can be projected with high accuracy onto the projection surface 100.

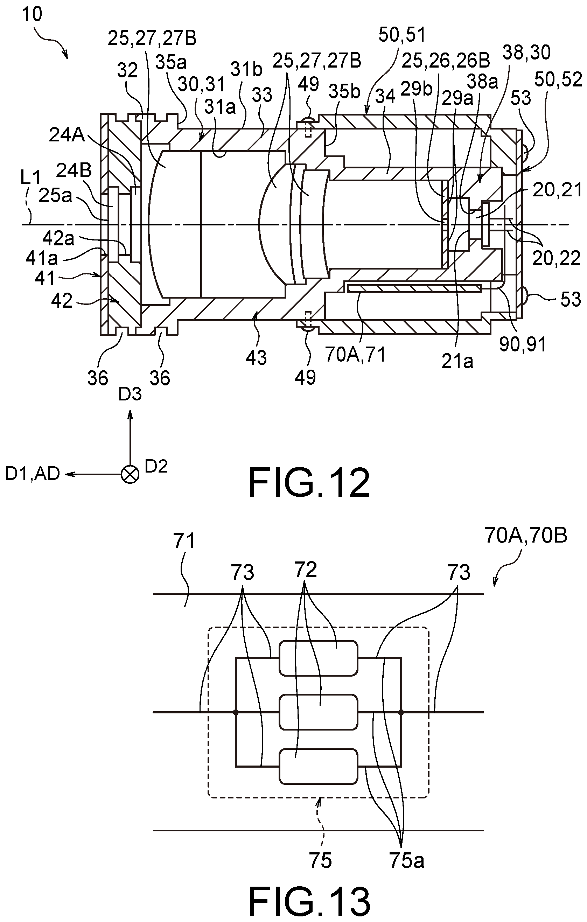

However, the configuration of the optical system 25 is not limited to the example illustrated in Fig. 9 to Fig. 11. As illustrated in Fig. 12, the optical system 25 may include a light-shielding mask 26B and a projection optical system 27B. Also with the example illustrated in Fig. 12, the projection pattern 101 can be projected onto the projection surface 100.

In the example illustrated in Fig. 12, the light-shielding mask 26B includes a light-shielding portion 29a and a light-transmitting portion 29b. The light-transmitting portion 29b may be an opening provided in a light-shielding plate constituting the light-shielding portion 29a. When the light-transmitting portion 29b has a shape corresponding to the projection pattern 101, light that has passed through the light-shielding mask 26B is shaped into a pattern corresponding to the projection pattern 101.

The projection optical system 27B forms an image, on the projection surface 100, of a desired pattern obtained through the light-shielding mask 26B. The projection optical system 27B may include a plurality of lenses. The projection optical system 27B may enlarge the pattern of the light-transmitting portion 29b and project the enlarged pattern onto the projection surface 100.

The optical system 25 may include one or more of a microlens array, a light diffusion element, a phosphor, and a spatial light modulator, instead of the diffractive optical element 26A or in addition to the diffractive optical element 26A. One or more of the microlens array, the light diffusion element, the phosphor, and the spatial light modulator may function as the pattern optical system 26.

As illustrated in Fig. 9, the optical system 25 may include a cover member 24A that protects the diffractive optical element 26A or the pattern optical system 26.

The diffractive optical element 26A and the cover member 24A are disposed in this order from the first side toward the second side in the axial direction AD. A gap may be provided between the diffractive optical element 26A and the cover member 24A in the axial direction AD. By providing the gap, condensation on a surface of the diffractive optical element 26A facing the cover member 24A can be suppressed. In the illustrated example, the exit end 25a is constituted by the diffractive optical element 26A.

In the example illustrated in Fig. 12, the optical system 25 may include a second cover member 24B in addition to the first cover member 24A. The second cover member 24B may be omitted.

The case 30 holds the light source 20. The case 30 accommodates the optical system 25. The optical system 25 is protected by the case 30 from physical contact and collision. Relative positions among components included in the optical system 25 are appropriately maintained by the case 30. Relative positions of the light source 20 and the optical system 25 are appropriately maintained by the case 30.

As illustrated in Fig. 9, the case 30 may include a tubular portion 31 and a bottom portion 38 connected to the tubular portion 31. The tubular portion 31 is tubular. The tubular portion 31 is open on both sides in the axial direction AD. The bottom portion 38 may be connected to the tubular portion 31 from the second side in the axial direction AD. As illustrated in Fig. 9, the bottom portion 38 may close at least partially an opening of the tubular portion 31 opened on the second side in the axial direction AD.

In the illustrated example, the bottom portion 38 is provided with a hole 38a at a position on the central axis L1. In the illustrated example, the light source 20 is held in the hole 38a. The hole 38a is closed by the light source 20.

The tubular portion 31 includes an inner surface 31a and an outer surface 31b. The optical system 25 is attached to the inner surface 31a and is held inside the tubular portion 31.

The tubular portion 31 includes a tip-end tubular portion 32, a first tubular portion 33, and a second tubular portion 34. The tip-end tubular portion 32, the first tubular portion 33, and the second tubular portion 34 are disposed in this order from the first side toward the second side in the axial direction AD.

As illustrated in Fig. 9, the second tubular portion 34 is narrower than the first tubular portion 33. A width of the second tubular portion 34 along the radial direction RD may be smaller than a width of the first tubular portion 33 along the radial direction RD. In any radial direction RD, the outer surface 31b at the second tubular portion 34 may be positioned coincident with the outer surface 31b at the first tubular portion 33 or inside the outer surface 31b at the first tubular portion 33. In projection onto a plane orthogonal to the axial direction AD, an outer contour of the second tubular portion 34 may be positioned coincident with an outer contour of the first tubular portion 33 or inside the outer contour of the first tubular portion 33. In projection onto a plane orthogonal to the axial direction AD, the outer contour of the second tubular portion 34 may be positioned inside the outer contour of the first tubular portion 33. The radial direction RD refers to a direction orthogonal to the central axis L1, as illustrated in Fig. 10.

As illustrated in Fig. 9, the first tubular portion 33 is narrower than the tip-end tubular portion 32. The width of the first tubular portion 33 along the radial direction RD may be smaller than a width of the tip-end tubular portion 32 along the radial direction RD. In any radial direction RD, the outer surface 31b at the first tubular portion 33 may be positioned coincident with the outer surface 31b at the tip-end tubular portion 32 or inside the outer surface 31b at the tip-end tubular portion 32. In projection onto a plane orthogonal to the axial direction AD, the outer contour of the first tubular portion 33 may be positioned coincident with an outer contour of the tip-end tubular portion 32 or inside the outer contour of the tip-end tubular portion 32. In projection onto a plane orthogonal to the axial direction AD, the outer contour of the first tubular portion 33 may be positioned inside the outer contour of the tip-end tubular portion 32.

The inside in the radial direction RD means a side closer to the central axis L1 in the radial direction RD. The outside in the radial direction RD means a side farther from the central axis L1 in the radial direction RD.

As illustrated in Fig. 9, the case 30 may include a tip-end step 35a positioned between the tip-end tubular portion 32 and the first tubular portion 33 in the axial direction AD. The tip-end step 35a may extend over an entire circumference along the circumferential direction CD about the central axis L1. That is, the tip-end step 35a may have a circumferential shape along the circumferential direction CD. The case 30 may include an intermediate step 35b positioned between the first tubular portion 33 and the second tubular portion 34 in the axial direction AD. The intermediate step 35b may extend over an entire circumference along the circumferential direction CD about the central axis L1. That is, the intermediate step 35b may have a circumferential shape along the circumferential direction CD. The circumferential direction CD refers to a circumferential direction about the central axis L1, as illustrated in Fig. 10.

As illustrated in Fig. 9, the case 30 may include, in the tip-end tubular portion 32, a plurality of annular grooves 36 extending in the circumferential direction CD. In the illustrated example, two annular grooves 36 are provided in the outer surface 31b located at the tip-end tubular portion 32. The two annular grooves 36 are separated from each other in the axial direction AD. The two annular grooves 36 may function as anti-slip portions when the illumination module 10 is gripped.

In the example illustrated in Fig. 9, the case 30 includes a first case member 41, a second case member 42, and a third case member 43. The first case member 41, the second case member 42, and the third case member 43 are disposed in this order from the first side toward the second side in the axial direction AD. The third case member 43 constitutes a part of the tip-end tubular portion 32, the first tubular portion 33, and the second tubular portion 34. The third case member 43 also constitutes the bottom portion 38. The lens system 27 of the optical system 25 is held inside the third case member 43.

The second case member 42 is plate-like. The second case member 42 includes a hole 42a at a position on the central axis L1. The hole 42a constitutes a part of the inner surface 31a of the case 30. The second case member 42 holds the diffractive optical element 26A and the cover member 24A in the hole 42a.

The first case member 41 is plate-like. The first case member 41 includes a hole 41a at a position on the central axis L1. The hole 41a faces the diffractive optical element 26A and the cover member 24A in the first direction D1. The diffractive optical element 26A is exposed in the hole 41a. The hole 41a is smaller than the diffractive optical element 26A. Therefore, the diffractive optical element 26A and the cover member 24A do not fall off from the hole 41a. The diffractive optical element 26A and the cover member 24A are stably held by the case 30.

The first case member 41, the second case member 42, and the third case member 43 may each be made of resin, or may each be made of metal. The first case member 41, the second case member 42, and the third case member 43 may be made of anodized aluminum alloy.

As illustrated in Fig. 9, the first case member 41, the second case member 42, and the third case member 43 may be connected to each other using a fastener 47 such as a screw. The first case member 41, the second case member 42, and the third case member 43 may be connected to each other using an adhesive. The first case member 41, the second case member 42, and the third case member 43 may be connected to each other using a fastener 47 such as a screw and an adhesive. The fastener 47 such as a screw may be a special screw that requires, for operation, a special tool other than a normal cross-head screwdriver or a slotted screwdriver.

In the example illustrated in Fig. 12, the first case member 41 and the second case member 42 can be omitted. In this example, the first cover member 24A and the second cover member 24B held by the first case member 41 and the second case member 42 can also be omitted.

The cover 50 partially covers the case 30. The cover 50 may cover the case 30 from the second side in the axial direction AD.

The cover 50 may have a tubular shape with an opening on the second side in the first direction D1 being closed. The cover 50 may have a cylindrical shape with an opening on the second side in the first direction D1 being closed. The cover 50 may have a circular contour in projection onto a plane orthogonal to the axial direction. Similarly, the case 30 may have a circular contour in projection onto a plane orthogonal to the axial direction.

As illustrated in Fig. 9 and Fig. 10, the cover 50 may include a side portion 51 and an end portion 52. The side portion 51 may be tubular. The side portion 51 may be cylindrical. The side portion 51 may be rectangular tubular. The end portion 52 may be plate-like. The end portion 52 may close an opening of the side portion 51 on the second side in the axial direction.

In the illustrated example, the side portion 51 and the end portion 52 are configured as separate parts. The side portion 51 and the end portion 52 may each be made of resin or may each be made of metal. The side portion 51 and the end portion 52 may be made of anodized aluminum alloy.

As illustrated in Fig. 8B and Fig. 9, the side portion 51 and the end portion 52 may be connected to each other using a fastener 53 such as a screw. The side portion 51 and the end portion 52 may be connected to each other using an adhesive. The side portion 51 and the end portion 52 may be connected to each other using a fastener 53 such as a screw and an adhesive. The fastener 53 such as a screw may be a special screw that requires, for operation, a special tool other than a normal cross-head screwdriver or a slotted screwdriver.

As illustrated in Fig. 9 and Fig. 10, the side portion 51 may face the case 30 at least partially in the radial direction RD. In this example, a gap may be formed between the case 30 and the cover 50 in the radial direction RD. The end portion 52 may face the case 30 in the axial direction AD. In this example, a gap may be formed between the case 30 and the cover 50 in the axial direction AD.

In the example illustrated in Fig. 9, an end portion of the side portion 51 on the first side in the axial direction AD is positioned on an end portion of the first tubular portion 33 of the case 30 on the second side in the axial direction AD. An inner surface of the side portion 51 is in contact with the outer surface 31b at the first tubular portion 33. The inner surface of the side portion 51 may be in circumferential contact with the outer surface 31b at the first tubular portion 33 over an entire length along the circumferential direction CD.

As illustrated in Fig. 10, an outer width of the second tubular portion 34 along the radial direction RD may be smaller than an inner width of the side portion 51 along the radial direction RD. In any radial direction RD, the outer surface 31b at the second tubular portion 34 may be positioned coincident with the inner surface of the side portion 51 or inside the inner surface of the side portion 51. In projection onto a plane orthogonal to the axial direction AD, an inner contour of the side portion 51 may be positioned coincident with an outer contour of the second tubular portion 34 or outside the outer contour of the second tubular portion 34. In projection onto a plane orthogonal to the axial direction AD, the inner contour of the side portion 51 may be positioned outside the outer contour of the second tubular portion 34.

As illustrated in Fig. 9 and Fig. 10, the cover 50 is separated outward in the radial direction RD from the outer surface 31b at the second tubular portion 34 of the case 30. That is, a gap is formed between the side portion 51 of the cover 50 and the second tubular portion 34 of the case 30 in the radial direction RD. The circuit board 70A may be disposed in this gap.

In projection onto a plane orthogonal to the axial direction AD, the cover 50 may be positioned coincident with an outer contour of the case 30 or inside the outer contour of the case 30. In any radial direction RD, an outer surface of the cover 50 may be positioned coincident with the outer surface 31b at the case 30 or inside the outer surface 31b of the case 30. As in the illustrated example, in projection onto a plane orthogonal to the axial direction AD, an outer contour of the cover 50 may be positioned coincident with the outer contour of the case 30 over an entire length in the circumferential direction CD.

As illustrated in Fig. 9, the case 30 and the cover 50 may be connected to each other using a fastener 49 such as a screw. The case 30 and the cover 50 may be connected to each other using an adhesive. The case 30 and the cover 50 may be connected to each other using a fastener 49 such as a screw and an adhesive. The fastener 49 such as a screw may be a special screw that requires, for operation, a special tool other than a normal cross-head screwdriver or a slotted screwdriver.

As illustrated in Fig. 7B and Fig. 8B, the illumination module 10 may include an external connection connector 61. The external connection connector 61 is a connector for ensuring electrical connection between the apparatus 105 with an illumination module and an external portion. The external connection connector 61 may be fixed by being engaged with a connector of an external wiring line, an external FPC (Flexible Printed Circuit), or the like and be electrically connected to the external wiring line, the external FPC, or the like.

As illustrated in Fig. 7B and Fig. 8B, the external connection connector 61 may be positioned offset from a center of the end portion 52. The center of the end portion 52 means a position of the end portion 52 that overlaps, in the axial direction AD, a centroid of the end portion 52 projected onto a plane orthogonal to the axial direction AD. According to such a configuration, arrangement of the external wiring line, the external FPC, and the like connected to the external connection connector 61 is stabilized. Unstable arrangement of the external wiring, the external FPC, and the like can be suppressed.

As illustrated in Fig. 9 and Fig. 10, the circuit board 70A is positioned between the case 30 and the cover 50. The circuit board 70A is covered by the cover 50 from the outer side in the radial direction RD. The circuit board 70A is covered by the cover 50 from the second side in the axial direction AD. The circuit board 70A is electrically connected to the light source 20. The circuit board 70A is electrically connected to the external connection connector 61.

The circuit board 70A may be a flexible board. As illustrated, the circuit board 70A may be a rigid board. As illustrated in Fig. 13, the circuit board 70A may include a board 71, an element 72, and a wiring line 73. Materials of the board 71 and the wiring line 73 are not particularly limited. As the materials of the board 71 and the wiring line 73, commonly used materials may be used. The board 71 may be a plate member in which a paper base material is impregnated with a resin, or may be a plate member including woven glass fibers and a resin. A material of the wiring line 73 may be copper, silver, aluminum, or an alloy thereof. The element 72 is an element expected to have various functions. Examples of the element 72 include a capacitor, a resistor, a diode, a transistor, and the like.

The circuit board 70A may include a circuit that receives an input signal from the control unit 114 or the control device 117 and a circuit that processes the received input signal. The circuit board 70A may include a circuit that receives power from the power supply unit 113 or the power supply device 118 and a circuit that performs processing such as voltage conversion on the received power.

The circuit board 70A may have a function as a safety device. When an input signal exceeding an allowable range is transmitted from the control unit 114 or the control device 117, the circuit board 70A may cut off power supply to the illumination module 10. The circuit board 70A is positioned between the illumination module 10 and the control unit 114 or between the illumination module 10 and the control device 117. The circuit board 70A can control lighting of the light source 20 at a position closer to the light source 20 than the control unit 114 and the control device 117. By disposing the circuit board 70A in the vicinity of the light source 20, a voltage drop during power transmission can be reduced. By reducing the voltage drop, an amount of light emitted from the light source 20 can be increased. Accordingly, power consumption of the illumination module 10 can be reduced.

As illustrated in Fig. 13, the circuit board 70A may include a driver IC 75 that drives the light source 20. When the light source 20 includes a laser diode, the driver IC 75 drives the laser diode. A relatively large current flows through the circuit board 70A and the driver IC 75 that drive the laser diode. Power consumption is proportional to the square of a value of the current. Power consumption of the circuit board 70A that drives the laser diode increases. Accordingly, an amount of heat generation in the circuit board 70A that drives the laser diode also increases.

As illustrated in Fig. 13, the driver IC 75 may include a plurality of channels 75a connected in parallel. The channels 75a are paths through which current flows. Each of the plurality of channels 75a may separately include the element 72. According to this example, current is distributed to and flows through the plurality of channels 75a, and thus a total amount of heat generation in the driver IC 75 as a whole can be reduced. Accordingly, the circuit board 70A can be suppressed from becoming high in temperature and operating unstably. Thus, reliability of control by the circuit board 70A can be improved. In addition, the value of the current flowing from the circuit board 70A to the light source 20 can be precisely adjusted.

In a first mode of the present embodiment, as illustrated in Fig. 9, the circuit board 70A is positioned at least partially between the exit end 25a of the optical system 25 and the light source 20 in the axial direction AD. With this arrangement of the circuit board 70A, a length of the illumination module 10 along the axial direction AD can be shortened. Thus, the illumination module 10 can be reduced in size.

As illustrated in Fig. 9, when the optical system 25 transforms light from the light source 20 from a divergent light beam to a parallel light beam, the circuit board 70A may not be disposed downstream of a position in the axial direction AD where light from the light source 20 becomes the parallel light beam.

The optical system 25 may include an optical element that shapes the divergent light beam into the parallel light beam. In the example illustrated in Fig. 9, the divergent light beam is collimated by the first lens 28A. In the axial direction AD, the circuit board 70A may be positioned between the light source 20 and the optical element 28A that shapes the divergent light beam into the parallel light beam. In the example illustrated in Fig. 9, in the axial direction AD, the circuit board 70A is not positioned between the optical element 28A that shapes the divergent light beam into the parallel light beam and the exit end 25a. In the axial direction AD, the circuit board 70A may be positioned only on the light source 20 side relative to the optical element 28A that shapes the divergent light beam into the parallel light beam. In the axial direction AD, the circuit board 70A may be positioned only on a side closer to the light source 20 relative to the optical element 28A that shapes the divergent light beam into the parallel light beam.

By disposing the circuit board 70A on the upstream side along the optical path relative to an optical element that shapes a divergent light beam into a parallel light beam, the circuit board 70A is positioned in the vicinity of the light source 20. By disposing the circuit board 70A in the vicinity of the light source 20, a voltage drop during power transmission can be reduced. By reducing the voltage drop, an amount of light source 20 can be increased. Accordingly, power consumption of the illumination module 10 can be reduced.

Dimensions of the illumination module 10 and the case 30 in the radial direction RD increase on the downstream side along the optical path relative to the optical element that shapes the divergent light beam into the parallel light beam. Dimensions of the illumination module 10 and the case 30 in the radial direction RD can be reduced on the upstream side along the optical path relative to the optical element that shapes the divergent light beam into the parallel light beam. By disposing the circuit board 70A on the upstream side along the optical path relative to the optical element that shapes the divergent light beam into the parallel light beam, the illumination module 10 including the circuit board 70A can be reduced in size.

The optical system 25 may include an optical element that performs shaping into a divergent light beam. In the example illustrated in Fig. 9, the third lens 28C diverges incident light. In the axial direction AD, the circuit board 70A may be positioned between the light source 20 and the optical element 28C that diverges incident light. In the example illustrated in Fig. 9, the circuit board 70A is not positioned between the optical element 28C that diverges incident light and the exit end 25a in the axial direction AD. In the axial direction AD, the circuit board 70A may be positioned only on the light source 20 side relative to the optical element 28C that diverges incident light. In the axial direction AD, the circuit board 70A may be positioned only on a side closer to the light source 20 than the optical element 28C that diverges incident light.

By disposing the circuit board 70A on the upstream side along the optical path relative to the optical element 28C that diverges incident light, the circuit board 70A is positioned in the vicinity of the light source 20. By disposing the circuit board 70A in the vicinity of the light source 20, a voltage drop during power transmission can be reduced. By reducing the voltage drop, an amount of light emitted from the light source 20 can be increased. Accordingly, power consumption of the illumination module 10 can be reduced.

In addition, on the upstream side along the optical path relative to the optical element 28C that diverges incident light, dimensions of the illumination module 10 and the case 30 in the radial direction RD can be further reduced. By disposing the circuit board 70A on the upstream side along the optical path relative to the optical element that shapes the divergent light beam into the parallel light beam, the illumination module 10 including the circuit board 70A can be reduced in size more efficiently.

As illustrated in Fig. 9 and Fig. 10, the circuit board 70A may face the second tubular portion 34 in the radial direction RD. The circuit board 70A may be positioned within a region in which the second tubular portion 34 is positioned in the axial direction AD. In the illustrated example, the tubular portion 31 of the case 30 includes the first tubular portion 33 and the second tubular portion 34. The first tubular portion 33 is positioned on the first side in the axial direction AD relative to the second tubular portion 34. The second tubular portion 34 is narrower than the first tubular portion 33. Accordingly, with this arrangement of the circuit board 70A, a dimension of the illumination module 10 in the axial direction AD can be shortened without increasing a maximum dimension of the illumination module 10 in the radial direction RD. That is, the illumination module 10 can be efficiently reduced in size.

As illustrated in Fig. 10, the board 71 of the circuit board 70A may be oriented in the radial direction RD orthogonal to the axial direction AD. The board 71 oriented in the radial direction RD orthogonal to the axial direction AD means that an angle θa (see Fig. 9) between a direction orthogonal to the board 71 (a normal direction to the board 71) and the axial direction AD is not less than 80° and not more than 90°. That is, a plate surface of the board 71 is oriented in the radial direction RD. The angle θa may be not less than 85° and not more than 90°, or may be 90°. According to this example, a dimension of the illumination module 10 in the axial direction AD can be shortened without increasing a maximum dimension of the illumination module 10 in the radial direction RD. That is, the illumination module 10 can be efficiently reduced in size.

An angle between a direction orthogonal to the board 71 (a normal direction to the board 71) and the axial direction AD is a smaller one of two angles between the normal direction of the board and the axial direction AD. This angle has a value of not less than 0° and not more than 90°.

As illustrated in Fig. 9, the circuit board 70A may be disposed so as to overlap the optical system 25 when the illumination module 10 is observed from the first side in the axial direction AD, for example, when the illumination module 10 is observed from the side of exiting light. The circuit board 70A may partially overlap the optical system 25. In addition, the entirety of the circuit board 70A may overlap the optical system 25. In other words, in projection onto a plane orthogonal to the axial direction AD, the circuit board 70A may be positioned, entirely or partially, inside an outer contour of the optical system 25. In projection onto a plane orthogonal to the axial direction AD, the circuit board 70A may be positioned inside the outer contour of the optical system 25.

By disposing the circuit board 70A relative to the optical system 25 in any of these manners, a maximum dimension of the illumination module 10 in the radial direction RD can be reduced. In addition, the circuit board 70A can be disposed in the vicinity of the light source 20. By disposing the circuit board 70A in the vicinity of the light source 20, a voltage drop during power transmission can be reduced. By reducing the voltage drop, an amount of light emitted from the light source 20 can be increased. Accordingly, power consumption of the illumination module 10 can be reduced.

As illustrated in Fig. 11 and the like, the illumination module 10 may include a connection member 90 that connects the light source 20 and the circuit board 70A. The connection member 90 may be a lead wire. The connection member 90 may be an FPC (Flexible Printed Circuit) 91. The FPC 91 is a flexible board. The FPC 91 includes a resin board such as a polyimide film, a polyethylene terephthalate film, or the like. The FPC 91 has flexibility. Accordingly, a degree of freedom in arrangement of the circuit board 70A can be improved.

In the example illustrated in Fig. 11, the FPC 91 has a hole 91a. The hole 91a extends through the FPC 91. The terminal 22 of the light source 20 passes through the hole 91a and extends through the FPC 91. The terminal 22 is electrically connected to the FPC 91 by solder 79. According to this configuration, stable electrical connection between the light source 20 and the FPC 91 can be ensured in a small space between the case 30 and the cover 50. Even when a large current flows from the first circuit board 70A to the light source 20, resonance of the FPC 91 can be suppressed.

The FPC 91 may be disposed in a space between the case 30 and the cover 50. With this arrangement of the FPC 91, the illumination module 10 can be reduced in size.

As illustrated in Fig. 11, the circuit board 70A may include a connector 77. The first circuit board 70A is physically and electrically connected to the FPC 91 at the connector 77.

As illustrated in Fig. 11, the FPC 91 may be attached, at a position between the light source 20 and the circuit board 70A, to the case 30. According to this example, movement of the FPC 91 can be restricted. Thus, electrical connection using the FPC 91 between the light source 20 and the circuit board 70A can be stably ensured. Even when a large current flows from the first circuit board 70A to the light source 20, resonance can be suppressed.

In the example illustrated in Fig. 11, the FPC 91 is fixed using a fastener 95 to the case 30. As illustrated in Fig. 11, the FPC 91 may be fixed to the bottom portion 38 of the case 30. The FPC 91 may be fixed to the tubular portion 31 of the case 30. The FPC 91 may be fixed to the second tubular portion 34 of the tubular portion 31 of the case 30.

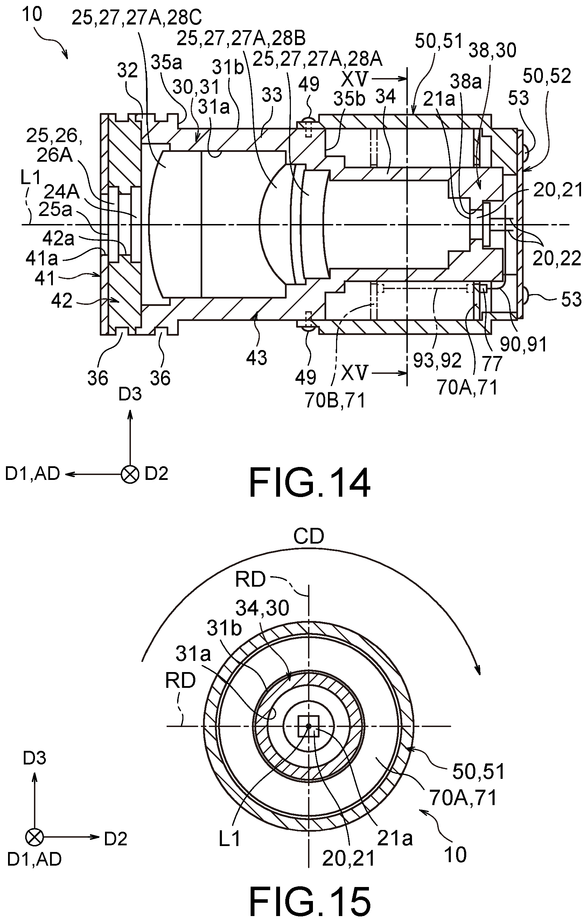

Unlike the example illustrated in Fig. 9 to Fig. 11, as illustrated in Fig. 14 and Fig. 15, the circuit board 70A may have an annular shape through which the second tubular portion 34 of the case 30 extends. Also in this example, the circuit board 70A is positioned at least partially between the exit end 25a of the optical system 25 and the light source 20 in the axial direction AD. Accordingly, a length of the illumination module 10 along the axial direction AD can be shortened. Thus, the illumination module 10 can be reduced in size.

In the example illustrated in Fig. 14 and Fig. 15, the board 71 may be oriented in the axial direction AD. The board 71 oriented in the axial direction AD means that an angle between a direction orthogonal to the board 71 (a normal direction to the board 71) and the axial direction AD is not less than 0° and not more than 10°. That is, a plate surface of the board 71 is oriented in the axial direction AD. This angle may be not less than 0° and not more than 5°, or may be 0°. According to this example, a dimension of the illumination module 10 in the axial direction AD can be shortened without increasing a maximum dimension of the illumination module 10 in the radial direction RD. That is, the illumination module 10 can be efficiently reduced in size.

The illumination module 10 may further include the second circuit board 70B in addition to the circuit board 70A described above as the first circuit board 70A. By providing the second circuit board 70B, an excessive increase in size of one circuit board can be suppressed. Thus, each of the circuit boards 70A and 70B can be disposed in a space between the case 30 and the cover 50. Thus, the illumination module 10 can be effectively reduced in size. In addition, the circuit boards 70A and 70B, which are heat sources, can be dispersed in the space between the case 30 and the cover 50. Thus, the illumination module 10 can be suppressed from becoming high in temperature during use and operating unstably. In addition, a large number of circuits can be mounted in the illumination module 10.

In the example illustrated in Fig. 9 to Fig. 11, the second circuit board 70B is disposed in the same manner as the first circuit board 70A. That is, the second circuit board 70B is positioned at least partially between the exit end 25a of the optical system 25 and the light source 20 in the axial direction AD. The second circuit board 70B may face the second tubular portion 34 in the radial direction RD. The board 71 of the second circuit board 70B may be oriented in the radial direction RD orthogonal to the axial direction AD. With these arrangements of the second circuit board 70B, the illumination module 10 can be reduced in size.

Also in the illumination module 10 illustrated in Fig. 14, as indicated by the two-dot chain line in Fig. 14, the second circuit board 70B is positioned at least partially between the exit end 25a of the optical system 25 and the light source 20 in the axial direction AD. The second circuit board 70B may have an annular shape through which the second tubular portion 34 of the case 30 extends. The board 71 of the second circuit board 70B may be oriented in the axial direction AD. With these arrangements of the second circuit board 70B, the illumination module 10 can be reduced in size.

As illustrated in Fig. 10, the first circuit board 70A and the second circuit board 70B may be electrically connected using a board connection member 92. An FPC (Flexible Printed Circuit) 93 may be used as the board connection member 92. The FPC 93 is a flexible board. The FPC 93 includes a resin board such as a polyimide film, a polyethylene terephthalate film or the like. The FPC 93 has flexibility. Accordingly, a degree of freedom in arrangement of the plurality of circuit boards 70A and 70B can be improved.

The FPC 93 may be disposed in a space between the case 30 and the cover 50. With this arrangement of the FPC 93, the illumination module 10 can be reduced in size.

The circuit boards 70A and 70B may be in contact with the case 30. While the illumination module 10 projects the projection pattern 101 onto the projection surface 100, the circuit boards 70A and 70B can be heat sources. Since the circuit boards 70A and 70B are in contact with the case 30, heat can be dissipated from the circuit boards 70A and 70B to the case 30 by heat conduction. That is, the case 30 can ensure a heat dissipation path for heat generated in the circuit boards 70A and 70B. Accordingly, overheating of the circuit boards 70A and 70B can be suppressed, and reliability of operation of the illumination module 10 can be improved.

As illustrated in Fig. 11, the case 30 may include an outer protrusion portion 39 protruding outward in the radial direction RD. The circuit boards 70A and 70B may be in surface contact with the case 30 at the outer protrusion portion 39. In the example illustrated in Fig. 14 and Fig. 15, the circuit boards 70A and 70B can be in contact at inner surfaces thereof with the case 30.

The circuit boards 70A and 70B may be fixed to the case 30 or the cover 50 by a circuit board fixture, not illustrated. The circuit board fixture may be fixed so as not to overlap the elements 72 on the circuit boards. The circuit board fixture may be disposed so as not to come into contact with the elements 72. The circuit board fixture may be made of a material having higher thermal conductivity than the boards 71 of the circuit boards 70A and 70B. With the circuit board fixture made of a material having the higher thermal conductivity, the case 30 can ensure a heat dissipation path for heat generated in the circuit boards 70A and 70B. With the circuit board fixture, thermal resistance between the elements 72 and the case 30 and/or thermal resistance between the elements 72 and the cover 50 can be reduced.

Although not illustrated, a heat dissipation member may be disposed so as to be in contact with the elements 72 of the circuit boards 70A and 70B. The heat dissipation member may be made of a material having higher thermal conductivity than the boards 71 of the circuit boards 70A and 70B. The heat dissipation member may be directly or indirectly connected to the circuit board fixture so as to facilitate heat conduction. With the heat dissipation member, a heat conduction path can be ensured, and thermal resistance between the elements 72 and the case 30 and/or thermal resistance between the elements 72 and the cover 50 can be reduced.

The circuit boards 70A and 70B may be in contact with the cover 50. Since the circuit boards 70A and 70B are in contact with the cover 50, heat can be dissipated from the circuit boards 70A and 70B to the cover 50 by heat conduction. That is, the cover 50 can ensure a heat dissipation path for heat generated in the circuit boards 70A and 70B. Accordingly, overheating of the circuit boards 70A and 70B can be suppressed, and reliability of operation of the illumination module 10 can be improved.

As illustrated in Fig. 11, the cover 50 may include an inner protrusion portion 54 protruding inward in the radial direction RD. The circuit boards 70A and 70B may be in surface contact with the cover 50 at the inner protrusion portion 54. In the example illustrated in Fig. 14 and Fig. 15, the circuit boards 70A and 70B can be in contact at outer peripheral edges thereof with the cover 50.

The circuit boards 70A and 70B may be in contact with both the case 30 and the cover 50. Heat generated in the circuit boards 70A and 70B can be efficiently dissipated from the illumination module.

Although the heat dissipation method for heat generated from the circuit boards 70A and 70B has been described above, similar effects can be obtained even when there is one circuit board.

The illumination module 10 having the above configuration is incorporated in the apparatus 105 with an illumination module or is attached to the apparatus 105 with an illumination module, as described with reference to Fig. 6A to Fig. 6D.

The case 30 and/or the cover 50 may be fixed to the apparatus 110. By fixing the case 30 and/or the cover 50 to the apparatus 110, the illumination module 10 is held at a constant relative position with respect to the apparatus 110. Thus, the projection pattern 101 can be projected with high accuracy onto an appropriate position on the projection surface 100. In addition, according to this configuration, heat generated in the circuit boards 70A and 70B can be efficiently conducted to the apparatus 110.

In the example illustrated in Fig. 11, the cover 50 includes a contact portion 50c that contacts the apparatus 110. The contact portion 50c may be positioned between each of the circuit boards 70A and 70B and the apparatus 110. According to this example, heat generated in the circuit boards 70A and 70B can be conducted to the apparatus 110 via the contact portion 50c of the cover 50. Accordingly, heat generated in the circuit boards 70A and 70B can be efficiently conducted to the apparatus 110.

The cover 50 may have a circular contour in projection onto a plane orthogonal to the axial direction AD. According to this example, a rotational position of the illumination module 10 about the axial direction AD can be appropriately adjusted, and the cover 50 can be fixed to the apparatus 110. Accordingly, the projection pattern 101 can be projected with high accuracy onto an appropriate position on the projection surface 100.

The case 30 may have a circular contour in projection onto a plane orthogonal to the axial direction AD. According to this example, a rotational position of the illumination module 10 about the axial direction AD can be appropriately adjusted, and the case 30 can be fixed to the apparatus 110. Accordingly, the projection pattern 101 can be projected with high accuracy onto an appropriate position on the projection surface 100.

In the example illustrated in Fig. 7A and Fig. 7B, the cover 50 includes a plurality of receiving holes 55. The receiving holes 55 receive a fastener 98 (see Fig. 11) such as a screw for attaching the illumination module 10 to the apparatus 110. By selecting an appropriate receiving hole 55 from among the plurality of receiving holes 55, a rotational position of the illumination module 10 about the axial direction AD can be appropriately adjusted.

In the example illustrated in Fig. 7A and Fig. 7B, the plurality of receiving holes 55 are provided at equal intervals in the circumferential direction CD. The receiving holes 55 may be provided in the case 30. The receiving holes 55 may be provided in both the case 30 and the cover 50.

As illustrated in Fig. 7A and Fig. 7B, the case 30 and/or the cover 50 may include an indication 64 indicating an installation orientation. The indication 64 may be an index indicating a rotational position of the illumination module 10 about the axial direction AD. The indication 64 may indicate an orientation of the pattern optical system 26. By using the indication 64, a rotational position of the illumination module 10 about the axial direction AD can be appropriately adjusted.

In the example illustrated in Fig. 7A and Fig. 7B, the indication 64 is provided on the cover 50. The indication 64 may be provided on the case 30. The indication 64 may be provided on both the case 30 and the cover 50.

In the first mode of the present embodiment described above, the illumination module 10 projects the projection pattern 101 onto the projection surface 100. The illumination module 10 includes the light source 20, the optical system 25 facing the light source 20 in the axial direction AD, the case 30 that holds the light source 20 and accommodates the optical system 25, and the circuit board 70A. The circuit board 70A is positioned at least partially between the exit end 25a of the optical system 25 and the light source 20 in the axial direction AD.

According to such a first mode, the circuit board 70A is positioned at least partially between the exit end 25a of the optical system 25 and the light source 20 in the axial direction AD. Accordingly, an increase in size of the illumination module 10 in the axial direction AD can be effectively suppressed.

In one specific example of the first mode of the present embodiment, the illumination device may include the cover 50 that partially covers the case 30. The first circuit board 70A may be positioned between the case 30 and the cover 50.

According to this specific example, the first circuit board 70A is disposed in a space between the case 30 and the cover 50. Thus, while the illumination module 10 is reduced in size, the first circuit board 70A can be physically protected between the case 30 and the cover 50. In addition, the illumination module 10 can be shielded by the cover 50 from electromagnetic noise emitted by the equipment 112, the power supply unit 113, the control unit 114, and the like that can be located near the illumination module 10. Accordingly, malfunction of the illumination module 10 due to electromagnetic noise can be suppressed. Furthermore, the first circuit board 70A is disposed in the space between the case 30 and the cover 50. Accordingly, a heat dissipation path for heat generated from the circuit board 70A can be ensured using the case 30 and the cover 50. Thus, malfunction of the illumination module 10 due to overheating can be suppressed.

In one specific example of the first mode of the present embodiment, the case 30 includes the tubular portion 31 and the bottom portion 38 connected to the tubular portion 31. The tubular portion 31 is open on the first side in the axial direction AD, and is at least partially closed by the bottom portion 38 from the second side. The optical system 25 is held inside the tubular portion 31. The light source 20 is held at the bottom portion 38. According to this example, an optical path from the light source 20 to the exit end 25a can be shielded effectively in the case 30. Accordingly, entry of foreign matter such as dust or the like into the case 30 can be suppressed. An optical effect expected from the optical system 25 in the case 30 can be suppressed from being impaired by foreign matter. Thus, the projection pattern 101 can be projected with high accuracy onto the projection surface 100.

The cover 50 includes the plate-shaped end portion 52 facing the case 30 in the axial direction AD, and the tubular side portion 51 facing the case 30 in the radial direction RD orthogonal to the axial direction AD. With such a cover 50, the circuit board 70A can be more reliably physically protected, and the first circuit board 70A can be protected from electromagnetic noise.

In projection onto a plane orthogonal to the axial direction AD, the cover 50 is positioned coincident with the case 30 or inside the case 30. With such a cover 50, a dimension of the illumination module 10 in the radial direction RD can be more effectively reduced.

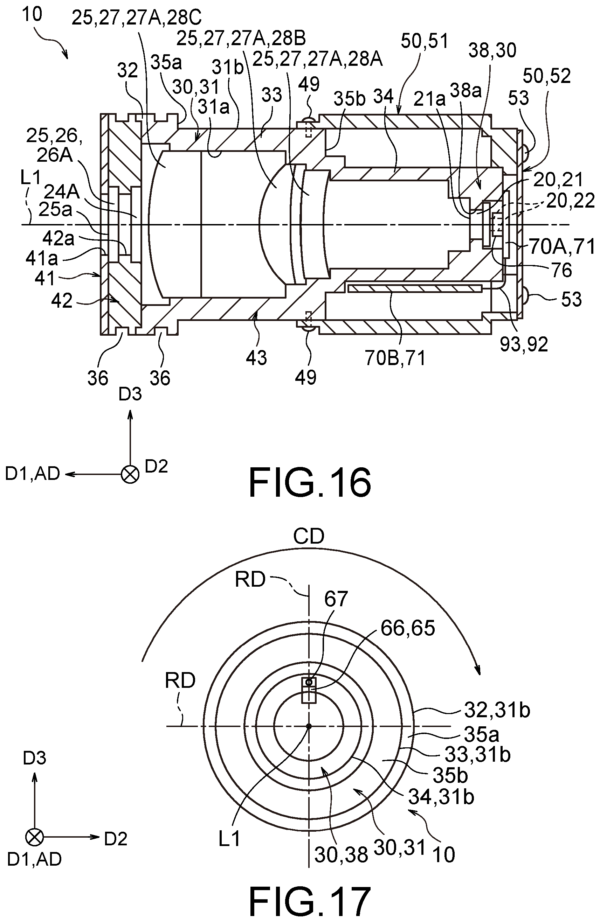

The first mode of the present embodiment has been described with reference to Fig. 9 to Fig. 15. In the first mode, the circuit board 70A is positioned at least partially between the exit end 25a of the optical system 25 and the light source 20 in the axial direction AD. However, the present embodiment is not limited to this example. A second mode of the present embodiment will be described with reference to Fig. 16 to Fig. 18.

In the second mode, as illustrated in Fig. 16 to Fig. 18, the circuit board 70A may include a socket 76 that contacts a terminal of the light source to be electrically connected thereto. The light source 20 may be positioned between the socket 76 and the optical system 25 in the axial direction AD. The light source 20 may be positioned between the circuit board 70A and the optical system 25 in the axial direction AD. With the arrangement of the circuit board 70A in the second mode as well, the illumination module 10 can be reduced in size.

The second mode differs from the above-described first mode in arrangement of the circuit board 70A. The second mode may be configured identically to the above-described first mode except for the arrangement of the circuit board 70A.

For example, the illumination device may include the cover 50 that partially covers the case 30. At least a part of the circuit board 70A may be positioned between the case 30 and the cover 50 in the axial direction AD.

The circuit board 70A faces the light source 20 in the axial direction AD. In projection onto a plane orthogonal to the axial direction AD, the light source 20 may be positioned inside an outer contour of the circuit board 70A.

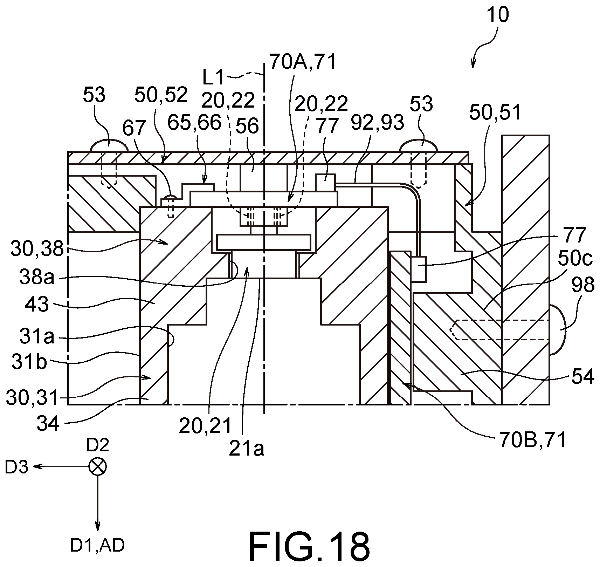

In the example illustrated in Fig. 16 and Fig. 18, the board 71 may be oriented in the axial direction AD. The board 71 oriented in the axial direction AD means that an angle between a direction orthogonal to the board 71 (a normal direction to the board 71) and the axial direction AD is not less than 0° and not more than 10°. That is, a plate surface of the board 71 is oriented in the axial direction AD. This angle may be not less than 0° and not more than 5°, or may be 0°. According to this example, a dimension of the illumination module 10 in the axial direction AD can be shortened without increasing a maximum dimension of the illumination module 10 in the radial direction RD. That is, the illumination module 10 can be efficiently reduced in size.

In the second mode, the illumination module 10 may include a dislodgement suppression mechanism 65. The dislodgement suppression mechanism 65 suppresses detachment of the socket 76 from the terminal 22 of the light source 20. With the dislodgement suppression mechanism 65, electrical connection between the light source 20 and each of the circuit boards 70A and 70B can be stably maintained.

The dislodgement suppression mechanism 65 may be constituted by the cover 50 that contacts the circuit board 70A from the second side in the axial direction AD. That is, relative movement of the circuit board 70A with respect to the light source 20 from the first side toward the second side in the axial direction AD may be restricted by the cover 50.

As illustrated in Fig. 18, the cover 50 may include an inner protrusion portion 56 protruding inward in the axial direction AD. The circuit board 70A may be in surface contact with the cover 50 at the inner protrusion portion 56. The inner protrusion portion 56 functions as the dislodgement suppression mechanism 65. The inner protrusion portion 56 can form, by contacting the circuit board 70A, a heat dissipation path for heat generated in the circuit board 70A.

As illustrated in Fig. 18, the dislodgement suppression mechanism 65 may include a plate member 66 that contacts the circuit board 70A from the second side in the axial direction AD. That is, relative movement of the circuit board 70A with respect to the light source 20 from the first side toward the second side in the axial direction AD may be restricted by the plate member 66. The plate member 66 may be fixed using a fastener 67 to the case 30. The plate member 66 may be fixed using the fastener 67 to the bottom portion 38 of the case 30. Unlike the illustrated example, the plate member 66 may be fixed to the cover 50. The plate member 66 functions as the dislodgement suppression mechanism 65. The plate member 66 can form, by contacting the circuit board 70A, a heat dissipation path for heat generated in the circuit board 70A.

As illustrated in Fig. 15 and the like, an outer width of the circuit board 70A along the radial direction RD may be smaller than an outer width of the case 30 along the radial direction RD. In any radial direction RD, an outer edge of the circuit board 70A may be positioned coincident with an outer surface of the case 30 or inside the outer surface of the case 30. In projection onto a plane orthogonal to the axial direction AD, an outer contour of the circuit board 70A may be positioned coincident with an outer contour of the case 30 or inside the outer contour of the case 30. In projection onto a plane orthogonal to the axial direction AD, the outer contour of the circuit board 70A may be positioned inside the outer contour of the case 30.

The circuit board 70A can be disposed while suppressing an increase in dimension of the illumination module 10 in the radial direction RD. Thus, the illumination module 10 can be efficiently reduced in size.

The outer width of the circuit board 70A along the radial direction RD may be smaller than an outer width of the first tubular portion 33 of the case 30 along the radial direction RD. In any radial direction RD, the outer edge of the circuit board 70A may be positioned coincident with an outer edge of the first tubular portion 33 or inside the outer edge of the first tubular portion 33. In projection onto a plane orthogonal to the axial direction AD, the outer contour of the circuit board 70A may be positioned coincident with an outer contour of the first tubular portion 33 or inside the outer contour of the first tubular portion 33. In projection onto a plane orthogonal to the axial direction AD, the outer contour of the circuit board 70A may be positioned inside the outer contour of the first tubular portion 33.

In the example illustrated in Fig. 16, an inner surface of the side portion 51 of the cover 50 is in contact with an outer surface of the tubular portion 31. Accordingly, the circuit board 70A is disposed in a space in the cover 50 without increasing a dimension of the illumination module 10 in the radial direction RD. Thus, the illumination module 10 can be efficiently reduced in size.

The outer width of the circuit board 70A along the radial direction RD may be smaller than an outer width of the second tubular portion 34 of the case 30 along the radial direction RD. In any radial direction RD, the outer edge of the circuit board 70A may be positioned coincident with an outer edge of the second tubular portion 34 or inside the outer edge of the second tubular portion 34. In projection onto a plane orthogonal to the axial direction AD, the outer contour of the circuit board 70A may be positioned coincident with an outer contour of the second tubular portion 34 or inside the outer contour of the second tubular portion 34. In projection onto a plane orthogonal to the axial direction AD, the outer contour of the circuit board 70A may be positioned inside the outer contour of the second tubular portion 34.

The outer width of the circuit board 70A along the radial direction RD may be smaller than an outer width of the bottom portion 38 of the case 30 along the radial direction RD. In any radial direction RD, the outer edge of the circuit board 70A may be positioned coincident with an outer edge of the bottom portion 38 or inside the outer edge of the bottom portion 38. In projection onto a plane orthogonal to the axial direction AD, the outer contour of the circuit board 70A may be positioned coincident with an outer contour of the bottom portion 38 or inside the outer contour of the bottom portion 38. In projection onto a plane orthogonal to the axial direction AD, the outer contour of the circuit board 70A may be positioned inside the outer contour of the bottom portion 38.

The outer width of the circuit board 70A along the radial direction RD may be smaller than an inner width of the side portion 51 of the cover 50 along the radial direction RD. In any radial direction RD, the outer edge of the circuit board 70A may be positioned coincident with an inner edge of the side portion 51 or inside the inner edge of the side portion 51. In projection onto a plane orthogonal to the axial direction AD, the outer contour of the circuit board 70A may be positioned coincident with an inner contour of the side portion 51 or inside the inner contour of the side portion 51. In projection onto a plane orthogonal to the axial direction AD, the outer contour of the circuit board 70A may be positioned inside the inner contour of the side portion 51.

Also in the second mode, the illumination module 10 may include the second circuit board 70B separate from the circuit board 70A, together with the circuit board 70A as the first circuit board 70A. By providing the second circuit board 70B, an excessive increase in size of one circuit board can be suppressed. Thus, each of the circuit boards 70A and 70B can be disposed in a space between the case 30 and the cover 50. The illumination module 10 can be effectively reduced in size. In addition, the circuit boards 70A and 70B, which are heat sources, can be dispersed in the space between the case 30 and the cover 50. Thus, the illumination module 10 can be suppressed from becoming high in temperature during use and operating unstably. In addition, a large number of circuits can be mounted in the illumination module 10.

The second circuit board 70B can be configured similarly to the first circuit board 70A and the second circuit board 70B described in the first mode. For example, as illustrated in Fig. 16, the second circuit board 70B may be positioned at least partially between the exit end 25a of the optical system 25 and the light source 20 in the axial direction AD. With this arrangement of the second circuit board 70B, the illumination module 10 can be reduced in size in the axial direction AD and the radial direction RD.

The second circuit board 70B may face the first tubular portion 33 in the radial direction RD. The board 71 of the second circuit board 70B may be oriented in the radial direction RD orthogonal to the axial direction AD. With this arrangement of the second circuit board 70B, the illumination module 10 can be reduced in size.

The circuit board 70A and the second circuit board 70B may be electrically connected by a board connection member 92 such as the FPC 93, for example. By using the FPC 93, the illumination module 10 can be reduced in size.

In the second mode of the present embodiment described above, the illumination module 10 projects the projection pattern 101 onto the projection surface 100. The illumination module 10 includes the light source 20, the optical system 25 facing the light source 20 in the axial direction AD, the case 30 that holds the light source 20 and accommodates the optical system 25, the cover 50 that partially covers the case 30, and the circuit board 70A positioned between the case 30 and the cover 50. The circuit board 70A includes the socket 76 that is in contact with the terminal 22 of the light source 20 to be electrically connected thereto. The light source 20 is positioned between the socket 76 and the optical system 25 in the axial direction AD. At least a part of the circuit board 70A is positioned between the case 30 and the cover 50 in the axial direction AD.

According to such a second mode, the case 30 and the first circuit board 70A can be directly connected using the socket 76. Accordingly, an increase in size of the illumination module 10 in the axial direction AD and the radial direction RD can be effectively suppressed. The first circuit board 70A is disposed in the space between the case 30 and the cover 50. Thus, while the illumination module 10 is reduced in size, the first circuit board 70A can be physically protected between the case 30 and the cover 50.

In addition, according to the second mode, the illumination module 10 can be shielded by the cover 50 from electromagnetic noise emitted by the equipment 112, the power supply unit 113, the control unit 114, and the like that can be located near the illumination module 10. Accordingly, malfunction of the illumination module 10 due to electromagnetic noise can be suppressed.

Furthermore, according to the second mode, the first circuit board 70A is disposed in the space between the case 30 and the cover 50. Accordingly, a heat dissipation path for heat generated from the circuit board 70A can be ensured using the case 30 and the cover 50. Thus, malfunction of the illumination module 10 due to overheating can be suppressed.

Although the present embodiment has been described with reference to a plurality of specific examples, the above-described specific examples do not limit the present embodiment. The above-described present embodiment can be implemented in various other specific examples, and various omissions, substitutions, modifications, additions, and the like can be made without departing from the spirit thereof.

An example of a modification will be described below with reference to the drawings. In the following description and drawings used in the following description, the same reference signs as those used for corresponding parts in the above-described specific examples are used for parts that can be configured similarly to those in the above-described specific examples, and redundant description is omitted.

In the specific examples described above, an example has been described in which a single illumination module 10 is used to project a pattern onto the projection surface 100. However, the present embodiment is not limited to this example.

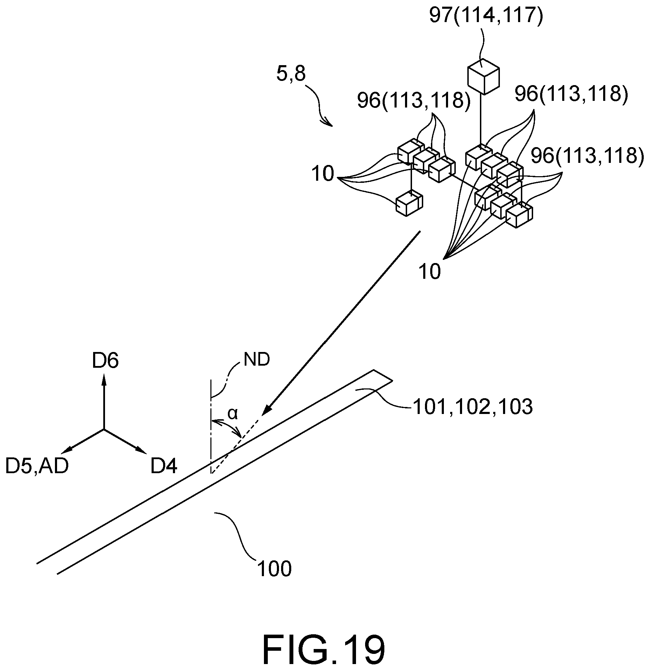

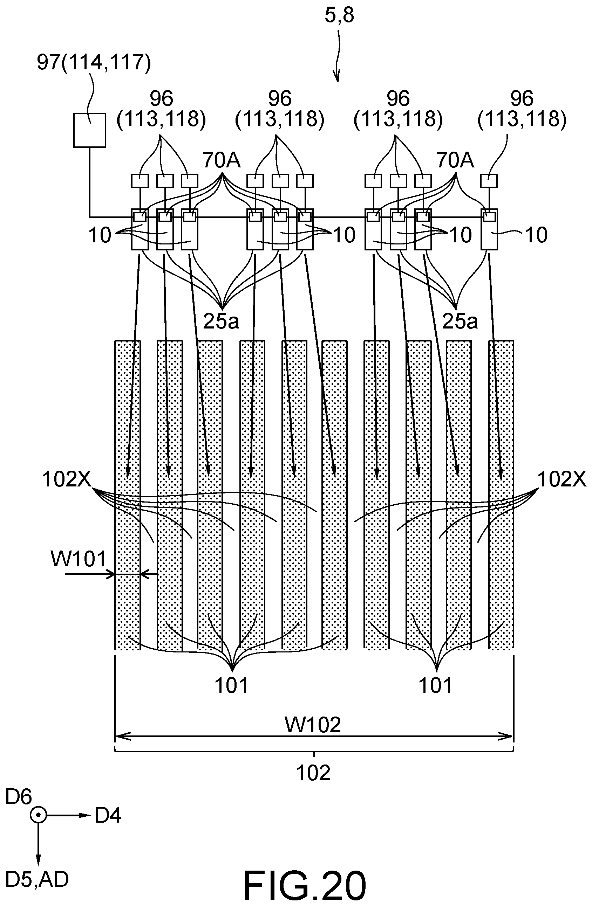

As illustrated in Fig. 19 and Fig. 20, an illumination system 5 may include an illumination module unit 8. The illumination module unit 8 includes the plurality of illumination modules 10. Each illumination module 10 included in the illumination system 5 projects the projection pattern 101 onto the projection surface 100. A plurality of the projection patterns 101 projected onto the projection surface 100 form an illumination pattern 102 as a composite pattern. That is, the illumination pattern 102 is displayed on the projection surface 100 by the plurality of projection patterns 101 projected onto the projection surface 100.

As illustrated in Fig. 19 and Fig. 20, the illumination method may include an illumination step of illuminating the projection surface 100 by using the illumination module unit 8. In the illumination step, the plurality of the projection patterns 101 are projected onto the projection surface 100 from the illumination module unit 8. The plurality of the projection patterns 101 projected onto the projection surface 100 form the illumination pattern 102 as a composite pattern. That is, the illumination pattern 102 is displayed on the projection surface 100 by the plurality of projection patterns 101 projected onto the projection surface 100.

According to the example illustrated in Fig. 19 and Fig. 20, the illumination pattern 102 projected onto the projection surface 100 is constituted by combining the plurality of projection patterns 101. Accordingly, a large illumination pattern 102 can be displayed on the projection surface 100. By adjusting brightness of the plurality of projection patterns 101, the illumination pattern 102 can be displayed brightly. According to the example illustrated in Fig. 19 and Fig. 20, the illumination pattern 102 that can be observed from a distance can be displayed on the projection surface 100.

Also in the example illustrated in Fig. 19 and Fig. 20, the projection surface 100 onto which the illumination pattern 102 and the projection patterns 101 are projected is not particularly limited. The projection surface 100 onto which the illumination pattern 102 and the projection patterns 101 are projected may be the same as those in the above-described example. The illumination pattern 102 and the projection patterns 101 are not particularly limited. The illumination pattern 102 and the projection patterns 101 may be the same as those in the above-described example.

Fig. 19 and Fig. 20 illustrate a configuration example of the illumination system 5. The illumination system 5 illustrated in Fig. 20 can project the plurality of the projection patterns 101 onto the projection surface 100. The illumination system 5 illustrated in Fig. 20 can display the illumination pattern 102 on the projection surface 100.

As illustrated in Fig. 19 and Fig. 20, the illumination system 5 includes the illumination module unit 8. The illumination module unit 8 includes the plurality of the illumination modules 10. The illumination modules 10 project the projection patterns 101 onto the projection surface 100. The illumination modules 10 irradiate the illuminated region 103 of the projection surface 100 with light. The illuminated region 103 is a region of the projection surface 100 onto which the projection pattern 101 is to be projected. The illuminated region 103 has the same shape as the projection pattern 101 to be projected.

As illustrated in Fig. 19, the plurality of illumination modules 10 may be positioned at mutually different positions. The plurality of illumination modules 10 may be held at constant relative positions with respect to the projection surface 100. The illumination modules 10 may be held by a holder such as a tripod or the like, not illustrated.

As illustrated in Fig. 19, the plurality of projection patterns 101 may be identical to each other. Some of the projection patterns 101 may be identical to each other. The plurality of projection patterns 101 may be different from each other. Some of the projection patterns 101 may be different from each other.

As illustrated in Fig. 19, shapes of the plurality of projection patterns 101 may be identical to each other. Shapes of some of the projection patterns 101 may be identical to each other. Shapes of the plurality of projection patterns 101 may be different from each other. Shapes of some of the projection patterns 101 may be different from each other.

Brightness of the plurality of projection patterns 101 may be identical to each other. Brightness of some of the projection patterns 101 may be identical to each other. Brightness of the plurality of projection patterns 101 may be different from each other. Brightness of some of the projection patterns 101 may be different from each other.

As illustrated in Fig. 19, projection positions of the plurality of projection patterns 101 on the projection surface 100 may be identical to each other. Projection positions of some of the projection patterns 101 on the projection surface 100 may be identical to each other. Projection positions of the plurality of projection patterns 101 on the projection surface 100 may be different from each other. Projection positions of some of the projection patterns 101 on the projection surface 100 may be different from each other.

As illustrated in Fig. 19 and Fig. 20, the illumination system 5 may include a power source 96 and an instructing device 97 in addition to the illumination module unit 8.

The power source 96 supplies power to the illumination module unit 8. As illustrated in Fig. 19 and Fig. 20, the power source 96 may include one or more of the power supply unit 113 and the power supply device 118 described above. A separate power source 96 may be provided for each illumination module 10. The power source 96 may be electrically connected to the plurality of illumination modules by wire or wirelessly. The power source 96 may be a storage battery. The power source 96 as the storage battery can be disposed in the vicinity of the illumination modules 10. By disposing the power source 96 in the vicinity of the illumination modules 10, power loss can be reduced.

The power source 96 may be electrically connected, by wire or wirelessly, to the circuit boards 70A of the illumination modules 10. The circuit board 70A of each illumination module 10 may adjust power supply from the power source 96 to the illumination module 10, independently of power supply from the power source 96 to the other illumination modules 10. That is, each circuit board 70A may adjust power supply from the power source 96 to the illumination module 10 without being affected by a state of power supply from the power source 96 to the other illumination modules 10.

The circuit board 70A of each illumination module 10 may switch between presence and absence of power supply from the power source 96 to the illumination module 10. The circuit board 70A of each illumination module 10 may switch between presence and absence of power supply from the power source 96 to the illumination module 10 independently of the circuit boards 70A of the other illumination modules 10. The circuit board 70A of each illumination module 10 may switch between presence and absence of power supply from the power source 96 to the illumination module 10 without being affected by the circuit boards 70A of the other illumination modules 10.

The circuit board 70A may adjust an amount of power supply from the power source 96 to the illumination module 10. The circuit board 70A of each illumination module 10 may adjust an amount of power supply from the power source 96 to the illumination module 10 independently of the circuit boards 70A of the other illumination modules 10. The circuit board 70A of each illumination module 10 may adjust an amount of power supply from the power source 96 to the illumination module 10 without being affected by the circuit boards 70A of the other illumination modules 10. Adjustment of the amount of power supply performed by the circuit board 70A may be adjustment of voltage and/or current. Adjustment of the amount of power supply performed by the circuit board 70A may be adjustment of an amount of power supply per unit time. Adjustment of the amount of power supply performed by the circuit board 70A may be adjustment of a time during which power is supplied per unit time.

As illustrated in Fig. 19 and Fig. 20, the illumination system 5 may include the instructing device 97. The instructing device 97 transmits an instruction signal to the circuit boards 70A of the plurality of illumination modules 10. As illustrated in Fig. 19 and Fig. 20, the instructing device 97 may include one or more of the power supply unit 113 and the power supply device 118 described above. The instructing device 97 is electrically connected to the circuit boards 70A by wire or wirelessly. The instructing device 97 transmits an instruction signal to the circuit boards 70A according to conditions input from outside or conditions recorded in advance. The circuit board 70A may include a circuit that receives an instruction signal from the instructing device 97, and a circuit that processes the received instruction signal. The circuit board 70A may adjust power supply to the light source 20 based on the instruction signal and may control projection of the projection pattern 101 based on the instruction signal. The instructing device 97 may include one or more of a smartphone, a tablet, and a computer. The instructing device 97 may include an interface for accepting manual operation.

Next, a method for illuminating the projection surface 100 by using the illumination system 5 and the illumination module unit 8 having the above configurations will be described.

The illumination method may include a step of preparing the illumination module unit 8 and the illumination step of illuminating the projection surface 100 by using the illumination module unit 8. In the step of preparing, the illumination pattern 102 to be displayed on the projection surface 100 may be selected. Selection of the illumination pattern 102 may be input to the instructing device 97. The instructing device 97 may select or generate an instruction signal for each circuit board 70A corresponding to the illumination pattern 102 to be displayed on the projection surface 100.

In the step of illuminating, each circuit board 70A supplies power from the power source 96 to a corresponding illumination module 10 based on the instruction signal from the instructing device 97. The illumination module 10 projects the projection pattern 101 onto the projection surface 100 by being supplied with power. The plurality of the projection patterns 101 are projected onto the projection surface 100 from the plurality of illumination modules 10 included in the illumination module unit 8. The plurality of the projection patterns 101 projected onto the projection surface 100 form the illumination pattern 102 as a composite pattern. That is, the illumination pattern 102 is displayed on the projection surface 100 by the plurality of projection patterns 101 projected onto the projection surface 100.

In the illumination method described above, the illumination pattern 102 projected onto the projection surface 100 is constituted by combining the plurality of projection patterns 101. Accordingly, a large illumination pattern 102 can be displayed on the projection surface 100. By adjusting shapes of the plurality of projection patterns 101, a complex illumination pattern 102 can be displayed. By adjusting brightness of the plurality of projection patterns 101, the illumination pattern 102 can be displayed brightly. As a result, the illumination pattern 102 that can be observed from a distance can be displayed on the projection surface 100.

In addition, by adjusting the shape and/or brightness of the individual projection patterns 101, designability of the illumination pattern 102 can be improved. By improving the designability of the illumination pattern 102, the illumination pattern 102 can be made conspicuous. As a result, the illumination pattern 102 displayed on the projection surface 100 can be made easier to observe from a distance.

The illumination system 5 and the illumination module unit 8 may include the plurality of the illumination modules 10. The plurality of illumination modules 10 may project mutually different projection patterns 101 onto the projection surface 100. With a configuration in which each illumination module 10 projects a part of the illumination pattern 102 or one projection pattern 101 rather than an entirety of the illumination pattern 102, power consumption of the illumination module unit 8 as a whole can be reduced. In addition, according to this configuration, laser safety of the different projection patterns can be maintained, and a decrease in laser safety of the illumination pattern as a whole can be suppressed.

Furthermore, in a configuration in which each illumination module 10 projects a part of the illumination pattern 102 or one projection pattern 101 rather than an entirety of the illumination pattern 102, power consumption of the individual illumination modules 10 is small. For the illumination module 10 having low power consumption, a degree of freedom of installation is improved. The illumination module 10 having low power consumption can be installed, together with the power source 96, at a place subject to restrictions such as size and capacity of the power source 96. Accordingly, the illumination module unit 8 and the illumination system 5 including the illumination modules 10 having low power consumption are suitable for installation in security devices, underground, ships, railway vehicles, aircraft, railway facilities, airport facilities, and the like.

With a configuration in which each illumination module 10 projects a part of the illumination pattern 102 or one projection pattern 101 rather than an entirety of the illumination pattern 102, projection by each illumination module 10 and stoppage of the projection can be switched independently of the other illumination modules 10. That is, display and non-display of each projection pattern 101 can be selected independently of the other projection patterns 101.

With a configuration in which each illumination module 10 projects a part of the illumination pattern 102 or one projection pattern 101 rather than an entirety of the illumination pattern 102, an amount of power supply for each illumination module 10 can be adjusted independently of those for the other illumination modules 10. That is, brightness of each projection pattern 101 can be adjusted independently of brightness of the other projection patterns 101.

That is, with a configuration in which each illumination module 10 projects a part of the illumination pattern 102 or one projection pattern 101 rather than an entirety of the illumination pattern 102, a shape and a brightness distribution of the illumination pattern 102 can be continuously or partially changed. According to this configuration, a moving image can be displayed. According to this configuration, designability of the illumination pattern 102 can be improved. By improving the designability of the illumination pattern 102, the illumination pattern 102 can be made conspicuous. In particular, compared with a case in which the entirety of the illumination pattern 102 is turned on and off to blink, the illumination pattern 102 can be made conspicuous without having even a momentary period in which the entirety is turned off, and thus the illumination pattern 102 is suitable for applications requiring information display such as attention calling and guidance in traffic routes and the like. As a result, the illumination pattern 102 displayed on the projection surface 100 can be made easier to observe from a distance.

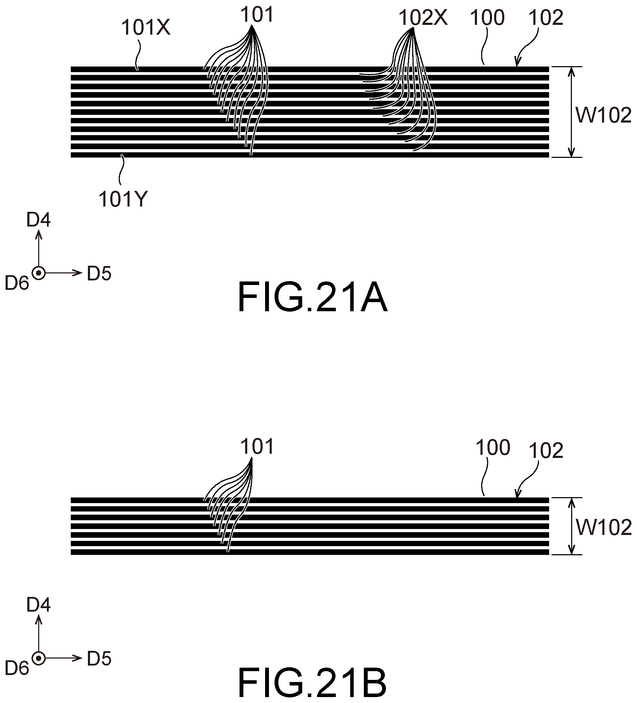

Fig. 21A to Fig. 21H illustrate specific examples of the illumination method. Fig. 21A to Fig. 21H illustrate specific examples of the illumination pattern 102 and the plurality of projection patterns 101. The illumination pattern 102 illustrated in Fig. 21A to Fig. 21H can be displayed on the projection surface 100 by the illumination system 5 and the illumination module unit 8 illustrated in Fig. 20. The plurality of projection patterns 101 illustrated in Fig. 21A to Fig. 21H can be projected onto the projection surface 100 by the illumination system 5 and the illumination module unit 8 illustrated in Fig. 20.

In the example illustrated in Fig. 19, Fig. 20, and Fig. 21A, the illumination pattern 102 as a composite pattern observed on the projection surface 100 has a line shape. The plurality of projection patterns 101 actually projected onto the projection surface 100 have line shapes. The illumination pattern 102 is observed in a line shape as a composite pattern obtained by combining the plurality of line-shaped projection patterns 101.

In the illustrated example, a longitudinal direction of a line constituted by the illumination pattern 102 is a fifth direction D5. As described above, according to the present example, a large illumination pattern 102 can be displayed. A length of the illumination pattern 102 along the longitudinal direction may be not less than 5 m, may be not less than 20 m, or may be not less than 50 m. The length of the illumination pattern 102 along the longitudinal direction may be not more than 200 m, may be not more than 100 m, or may be not more than 50 m.

In the illustrated example, a width direction of the line constituted by the illumination pattern 102 is a fourth direction D4. A length (width) of the illumination pattern 102 along the width direction may be not more than 50 cm, may be not more than 20 cm, or may be not more than 10 cm. The length (width) of the illumination pattern 102 along the width direction may be not less than 2 cm, may be not less than 10 cm, or may be not less than 20 cm.

In irradiation of the line-shaped illuminated region 103 with light, an incident angle α of light incident on the projection surface 100 from the illumination module 10 can become very large. A maximum value of the incident angle α may be less than 90°. As illustrated in Fig. 19, the incident angle α is an angle formed between a traveling direction of projection light and a normal direction ND of the projection surface 100.

Fig. 21A is a plan view illustrating, as a whole, the illumination pattern 102 displayed on the projection surface 100 as illustrated in Fig. 20 together with the plurality of projection patterns 101. As illustrated in Fig. 21A, the plurality of projection patterns 101 may be arranged in the fourth direction D4. The plurality of projection patterns 101 may extend in the fifth direction D5 non-parallel to the fourth direction D4. In the example illustrated in Fig. 21A, the illumination pattern 102 has a line shape.

As illustrated in Fig. 20, a width W101 of each projection pattern 101 in the fourth direction D4 is smaller than a width W102 of the illumination pattern 102 in the fourth direction D4. According to the illustrated example, the illumination pattern 102 having the large width W102 can be displayed by combining the plurality of projection patterns 101 each having the small width W101. The present inventors have confirmed that, by displaying one illumination pattern 102 having the large width W102 with the plurality of projection patterns 101 projected while being shifted in the fourth direction D4, the illumination pattern 102 can be made more conspicuous and can be made easier to observe from a distance while reducing total power consumption. In addition, by projecting the plurality of projection patterns 101 while shifting the projection patterns in the fourth direction D4, laser safety can be more stably improved. Furthermore, power consumption of the individual illumination modules 10 can be more stably reduced. For the illumination module 10 having reduced power consumption, a degree of freedom of installation is improved.

In the example illustrated in Fig. 20 and Fig. 21A, each of the plurality of projection patterns 101 extends linearly in the fifth direction D5 orthogonal to the fourth direction D4. Each projection pattern 101 has a line shape. In this example, the illumination pattern 102 extends linearly in the fifth direction D5 orthogonal to the fourth direction D4. The illumination pattern 102 also has a line shape similarly to the illumination pattern 102 illustrated in Fig. 19.

As illustrated in Fig. 20, the width W101 of each line-shaped projection pattern 101 is smaller than the width W102 of the illumination pattern 102 observed in a line shape. According to the illustrated example, the illumination pattern 102 having the large width W102 can be displayed by combining the plurality of projection patterns 101 each having the small width W101. The present inventors have confirmed that, by displaying one illumination pattern 102 having the large width W102 with the plurality of projection patterns 101 projected while being shifted in the fourth direction D4, the line-shaped illumination pattern 102 can be made more conspicuous and can be made easier to observe from a distance while reducing total power consumption. In addition, by projecting the plurality of projection patterns 101 while shifting the projection patterns 101 in the fourth direction D4, laser safety can be more stably improved. Furthermore, power consumption of the individual illumination modules 10 can be more stably reduced. For the illumination module 10 having reduced power consumption, a degree of freedom of installation is improved.

As illustrated in Fig. 20 and Fig. 21A, on the projection surface 100, the plurality of projection patterns 101 are spaced apart from each other in the fourth direction D4. That is, a non-illuminated region that is not irradiated with projection light is present between two projection patterns 101 adjacent to each other in the fourth direction D4. If a width of the non-illuminated region 102X along the fourth direction D4 is short, the non-illuminated region 102X can be made less conspicuous when observed from a distance. That is, when observed from a distance, the illumination pattern 102 having an increased width W102 can be more clearly observed while making the non-illuminated region 102X difficult to observe.

When determining whether two adjacent projection patterns 101 are spaced apart from each other in the fourth direction D4, first, regions on which respective projection patterns 101 are projected are identified. When two regions on each of which a corresponding one of two adjacent projection patterns 101 is projected are spaced apart from each other in the fourth direction D4, the two adjacent projection patterns 101 are evaluated as being spaced apart from each other in the fourth direction D4. Regions on each of which a corresponding one of the projection patterns 101 is projected are determined in a state in which only the projection patterns 101 are projected onto the projection surface 100. Regions on each of which a corresponding one of the projection patterns 101 is projected are identified as regions in which illuminance of not less than 5% of maximum illuminance at a position on the projection surface 100 due to projection light forming the projection patterns 101 is obtained.

In the step of illuminating, the number of the plurality of projection patterns 101 may be changed. That is, in the step of illuminating, the number of the projection patterns 101 that are turned on may be changed. The number of the projection patterns 101 can be changed by adjusting presence or absence of power supply to the plurality of illumination modules 10. In the step of illuminating, a thickness and/or brightness of the illumination pattern 102 may be controlled by adjusting the number of the plurality of projection patterns 101. By increasing the width of the illumination pattern 102, the illumination pattern 102 can be observed more clearly from a distance. By increasing the brightness of the illumination pattern 102, the illumination pattern 102 can be observed more clearly from a distance.

For example, the illumination pattern 102 becomes difficult to observe due to environmental conditions such as rain and fog. As another example, it is more difficult for a moving observer to observe the illumination pattern 102 than for a stationary observer. Examples of the moving observer include a person riding on a mobile body moving at high speed. More specifically, crew members or passengers of a car, a railway vehicle, a ship, an airplane, and the like are exemplified as the moving observer. Depending on an environment, a state of the observer, and the like, a thickness and/or brightness of the illumination pattern 102 may be controlled to make the illumination pattern 102 easy to observe.

In the example illustrated in Fig. 21B, part of the plurality of projection patterns 101 illustrated in Fig. 21A is turned off. The illumination pattern 102 illustrated in Fig. 21B has a shorter width W102 along the fourth direction D4 than the illumination pattern 102 illustrated in Fig. 21A. Under conditions in which the illumination pattern 102 is easy to observe, a smaller number of the projection patterns 101 may be projected onto the projection surface 100 as illustrated in Fig. 21B. The illumination pattern 102 illustrated in Fig. 21B can be displayed with low power consumption. Under conditions in which the illumination pattern 102 is difficult to observe, a larger number of the projection patterns 101 may be projected onto the projection surface 100 as illustrated in Fig. 21A. As illustrated in Fig. 21A, by increasing the width W102 of the illumination pattern 102, the illumination pattern 102 can be made easy to observe.

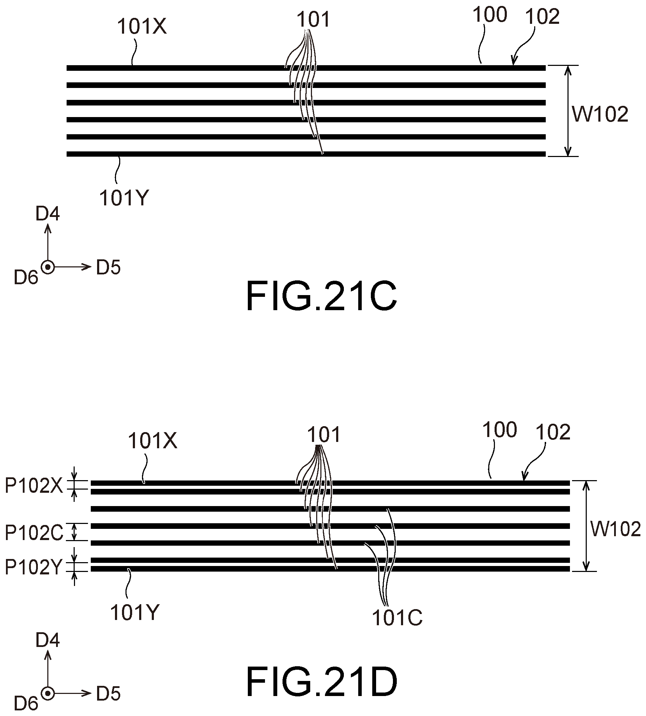

In the example illustrated in Fig. 21C, part of the plurality of projection patterns 101 illustrated in Fig. 21A is turned off. The width W102 of the illumination pattern 102 illustrated in Fig. 21C is the same as the width W102 of the illumination pattern 102 illustrated in Fig. 21A. The number of the projection patterns 101 that are turned on is larger in the example illustrated in Fig. 21A than in the example illustrated in Fig. 21C. Accordingly, the illumination pattern 102 illustrated in Fig. 21A is observed as being brighter than the illumination pattern 102 illustrated in Fig. 21C. Under conditions in which the illumination pattern 102 is easy to observe, a smaller number of the projection patterns 101 may be projected onto the projection surface 100 as illustrated in Fig. 21C. The illumination pattern 102 illustrated in Fig. 21C can be displayed with low power consumption. Under conditions in which the illumination pattern 102 is difficult to observe, a larger number of the projection patterns 101 may be projected onto the projection surface 100 as illustrated in Fig. 21A. As illustrated in Fig. 21A, by increasing brightness of the illumination pattern 102, the illumination pattern 102 can be made easy to observe.

In the example illustrated in Fig. 21C, the projection patterns 101 that are turned on include a first outermost projection pattern 101X and a second outermost projection pattern 101Y. The first outermost projection pattern 101X is the projection pattern 101 positioned closest to the first side in the fourth direction D4. The second outermost projection pattern 101Y is the projection pattern 101 positioned closest to the second side in the fourth direction D4. The width W102 of the illumination pattern 102 illustrated in Fig. 21C is the same as the width W102 of the illumination pattern 102 illustrated in Fig. 21A and is larger than the width W102 of the illumination pattern 102 illustrated in Fig. 21B. The illumination pattern 102 illustrated in Fig. 21C is easier to observe even from a distance than the illumination pattern 102 illustrated in Fig. 21B.

In the example illustrated in Fig. 21D, part of the plurality of projection patterns 101 illustrated in Fig. 21A is turned off. The width W102 of the illumination pattern 102 illustrated in Fig. 21D is the same as the width W102 of the illumination pattern 102 illustrated in Fig. 21A. The number of the projection patterns 101 that are turned on is larger in the example illustrated in Fig. 21A than in the example illustrated in Fig. 21D. Accordingly, the illumination pattern 102 illustrated in Fig. 21D can be observed as being darker to some extent than the illumination pattern 102 illustrated in Fig. 21A.

However, as illustrated in Fig. 21D, at certain positions that are the same in the fifth direction D5 on the projection surface 100, an arrangement pitch P102X of the first outermost projection pattern 101X is smaller than an arrangement pitch P102C of an intermediate projection pattern 101C. At certain positions that are the same in the fifth direction D5 on the projection surface 100, an arrangement pitch P102Y of the second outermost projection pattern 101Y is smaller than the arrangement pitch P102C of the intermediate projection pattern 101C.

The first outermost projection pattern 101X is the projection pattern 101 positioned closest to the first side in the fourth direction D4. The second outermost projection pattern 101Y is the projection pattern 101 positioned closest to the second side in the fourth direction D4. The intermediate projection pattern 101C is the projection pattern 101 positioned between the first outermost projection pattern 101X and the second outermost projection pattern 101Y in the fourth direction D4.

In the example illustrated in Fig. 21D, both outer side portions of the illumination pattern 102 in the fourth direction D4 are observed as being brighter than an intermediate portion in the fourth direction D4. An outer contour of the illumination pattern 102 illustrated in Fig. 21D can be observed more clearly. On the other hand, since brightness at the intermediate portion in the fourth direction D4 is reduced, power consumption can be reduced. Accordingly, according to the example illustrated in Fig. 21D, the illumination pattern 102 can be clearly observed even from a distance while reducing power consumption. The illumination pattern 102 illustrated in Fig. 21D can be observed with substantially the same brightness as the illumination pattern 102 illustrated in Fig. 21A.

In the example illustrated in Fig. 21D, at any positions that are the same in the fifth direction D5 on the projection surface 100, the arrangement pitch P102X of the first outermost projection pattern 101X may be made smaller than the arrangement pitch P102C of the intermediate projection pattern 101C. At any positions that are the same in the fifth direction D5 on the projection surface 100, the arrangement pitch P102Y of the second outermost projection pattern 101Y may be made smaller than the arrangement pitch P102C of the intermediate projection pattern 101C. According to this example, at any positions that are the same in the fifth direction D5 on the projection surface 100, both outer side portions of the illumination pattern 102 in the fourth direction D4 can be observed as being brighter than the intermediate portion in the fourth direction D4. An outer contour of the illumination pattern 102 illustrated in Fig. 21D can be observed more clearly. On the other hand, since brightness at the intermediate portion in the fourth direction D4 is reduced, power consumption can be reduced. Accordingly, the illumination pattern 102 can be observed more clearly even from a distance while reducing power consumption.

In the example illustrated in Fig. 21D, at certain positions that are the same in the fifth direction D5 on the projection surface 100, the arrangement pitch P102X of the first outermost projection pattern 101X may be made smaller than an arrangement pitch of each of the projection patterns 101 other than the second outermost projection pattern 101Y. In the example illustrated in Fig. 21D, at certain positions that are the same in the fifth direction D5 on the projection surface 100, the arrangement pitch P102Y of the second outermost projection pattern 101Y may be made smaller than an arrangement pitch of each of the projection patterns other than the first outermost projection pattern 101X. According to this example, at certain positions that are the same in the fifth direction D5 on the projection surface 100, both outer side portions of the illumination pattern 102 in the fourth direction D4 can be observed as being brighter than the intermediate portion in the fourth direction D4. An outer contour of the illumination pattern 102 illustrated in Fig. 21D can be observed more clearly. On the other hand, since brightness at the intermediate portion in the fourth direction D4 is reduced, power consumption can be reduced. Accordingly, the illumination pattern 102 can be clearly observed even from a distance while reducing power consumption.

In the example illustrated in Fig. 21D, at any positions that are the same in the fifth direction D5 on the projection surface 100, the arrangement pitch P102X of the first outermost projection pattern 101X may be made smaller than an arrangement pitch of each of the projection patterns 101 other than the second outermost projection pattern 101Y. In the example illustrated in Fig. 21D, at any positions that are the same in the fifth direction D5 on the projection surface 100, the arrangement pitch P102Y of the second outermost projection pattern 101Y may be made smaller than an arrangement pitch of each of the projection patterns other than the first outermost projection pattern 101X. According to this example, at any positions that are the same in the fifth direction D5 on the projection surface 100, both outer side portions of the illumination pattern 102 in the fourth direction D4 can be observed as being brighter than the intermediate portion in the fourth direction D4. An outer contour of the illumination pattern 102 illustrated in Fig. 21D can be observed more clearly. On the other hand, since brightness at the intermediate portion in the fourth direction D4 is reduced, power consumption can be reduced. Accordingly, the illumination pattern 102 can be observed more clearly even from a distance while reducing power consumption.

In the step of illuminating, brightness of the projection patterns 101 may be changed. Brightness of each projection pattern 101 can be adjusted by an amount of power supply to the illumination module 10 corresponding to the projection pattern 101. In the step of illuminating, brightness of the illumination pattern 102 may be controlled by adjusting brightness of the plurality of projection patterns 101. By increasing brightness of the illumination pattern 102, the illumination pattern 102 can be made easier to observe from a distance.

For example, the illumination pattern 102 becomes difficult to observe due to environmental conditions such as rain and fog. It is more difficult for a moving observer to observe the illumination pattern 102 than for a stationary observer. Examples of the moving observer include a person riding on a mobile body moving at high speed. More specifically, operators and passengers of a car, a railway vehicle, a ship, an airplane, and the like are exemplified as the moving observer. Depending on an environment, a state of the observer, and the like, brightness of the projection patterns 101 may be controlled to make the illumination pattern 102 easy to observe.

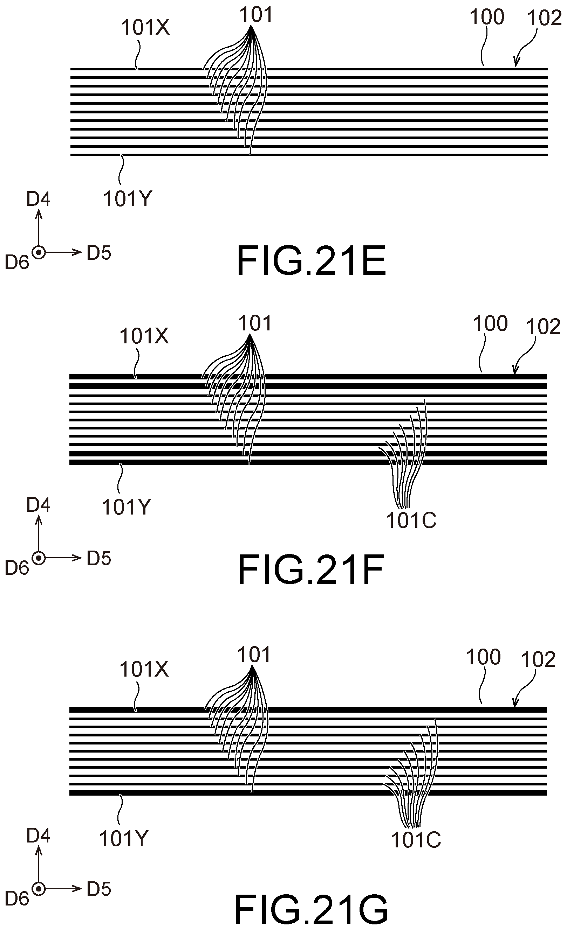

In the example illustrated in Fig. 21E, brightness of the plurality of projection patterns 101 illustrated in Fig. 21A is decreased. The illumination pattern 102 illustrated in Fig. 21A is observed as being brighter than the illumination pattern 102 illustrated in Fig. 21E. Under conditions in which the illumination pattern 102 is easy to observe, as illustrated in Fig. 21E, output of the illumination modules 10 may be decreased to project the projection patterns 101 onto the projection surface 100. The illumination pattern 102 illustrated in Fig. 21E can be displayed with low power consumption. Under conditions in which the illumination pattern 102 is difficult to observe, as illustrated in Fig. 21A, output of the illumination modules 10 may be increased to brightly project the projection patterns 101 onto the projection surface 100. As illustrated in Fig. 21A, by increasing brightness of the illumination pattern 102, the illumination pattern 102 can be made easy to observe.

In the example illustrated in Fig. 21E, brightness of all the projection patterns 101 is decreased as compared with the example illustrated in Fig. 21A. As illustrated in Fig. 21F and Fig. 21G, only brightness of part of the plurality of projection patterns 101 may be decreased.

As illustrated in Fig. 21F, at certain positions that are the same in the fifth direction D5 on the projection surface 100, the first outermost projection pattern 101X may be projected onto the projection surface 100 more brightly than the intermediate projection pattern 101C. At certain positions that are the same in the fifth direction D5 on the projection surface 100, the second outermost projection pattern 101Y may be projected onto the projection surface 100 more brightly than the intermediate projection pattern 101C. That is, in the example illustrated in Fig. 21F, the illumination pattern 102 is brighter on both sides in the fourth direction D4 than an intermediate portion in the fourth direction D4. An outer contour of the illumination pattern 102 illustrated in Fig. 21F can be observed more clearly. On the other hand, since brightness at the intermediate portion in the fourth direction D4 is reduced, power consumption can be reduced. Accordingly, according to the example illustrated in Fig. 21F, the illumination pattern 102 can be clearly observed even from a distance while reducing power consumption.

Brightness of the projection patterns is compared based on illuminance at positions that are the same in the fifth direction D5. For example, when comparing brightness between a first projection pattern and a second projection pattern, maximum illuminance of the first projection pattern and maximum illuminance of the second projection pattern at a specific position in the fifth direction D5 are compared. A projection pattern having larger maximum illuminance is evaluated as a brighter projection pattern.

In the example illustrated in Fig. 21F, at any positions that are the same in the fifth direction D5 on the projection surface 100, the first outermost projection pattern 101X may be projected onto the projection surface 100 more brightly than the intermediate projection pattern 101C. At any positions that are the same in the fifth direction D5 on the projection surface 100, the second outermost projection pattern 101Y may be projected onto the projection surface 100 more brightly than the intermediate projection pattern 101C. According to this example, the illumination pattern 102 can be observed more clearly even from a distance while reducing power consumption.

As illustrated in Fig. 21G, at certain positions that are the same in the fifth direction D5 on the projection surface 100, the first outermost projection pattern 101X may be projected onto the projection surface 100 more brightly than the other projection patterns other than the second outermost projection pattern 101Y. At certain positions that are the same in the fifth direction D5 on the projection surface 100, the second outermost projection pattern 101Y may be projected onto the projection surface 100 more brightly than the other projection patterns other than the first outermost projection pattern 101X. According to this example, the illumination pattern 102 can be observed more clearly even from a distance while reducing power consumption.

In the example illustrated in Fig. 21G, at any positions that are the same in the fifth direction D5 on the projection surface 100, the first outermost projection pattern 101X may be projected onto the projection surface 100 more brightly than the other projection patterns 101 other than the second outermost projection pattern 101Y. At any positions that are the same in the fifth direction D5 on the projection surface 100, the second outermost projection pattern 101Y may be projected onto the projection surface 100 more brightly than the other projection patterns 101 other than the first outermost projection pattern 101X. According to this example, the illumination pattern 102 can be observed more clearly even from a distance while reducing power consumption.

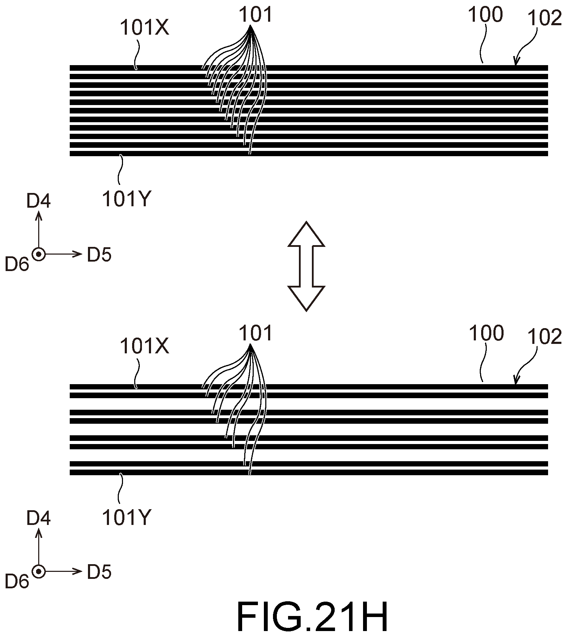

As illustrated in Fig. 21H, in the step of illuminating, part of the projection patterns 101 included in the plurality of projection patterns 101 may be caused to blink. By causing part of the projection patterns 101 to blink, the illumination pattern 102 can be made conspicuous. As a result, the illumination pattern 102 displayed on the projection surface 100 can be made easier to observe from a distance.

As illustrated in Fig. 21H, while part of the projection patterns 101 is caused to blink, one or more other projection patterns 101 included in the plurality of projection patterns 101 may be kept turned on. According to this example, the illumination pattern 102 can be continuously displayed on the projection surface 100. Accordingly, the illumination pattern 102 displayed on the projection surface 100 can be made easier to observe from a distance.

As illustrated in Fig. 21H, the one or more other projection patterns 101 kept turned on may include the projection pattern 101 positioned on the first side in the fourth direction D4 relative to the part of the projection patterns 101, and the projection pattern 101 positioned on the second side in the fourth direction D4 relative to the part of the projection patterns. The one or more other projection patterns 101 kept turned on may include the first outermost projection pattern 101X and the second outermost projection pattern 101Y. The projection patterns 101 that are turned on form outer edges of the illumination pattern 102 in the fourth direction D4. That is, the width W102 of the illumination pattern 102 that blinks partially is constant in the fourth direction D4. Accordingly, the illumination pattern 102 displayed on the projection surface 100 can be made easier to observe from a distance.

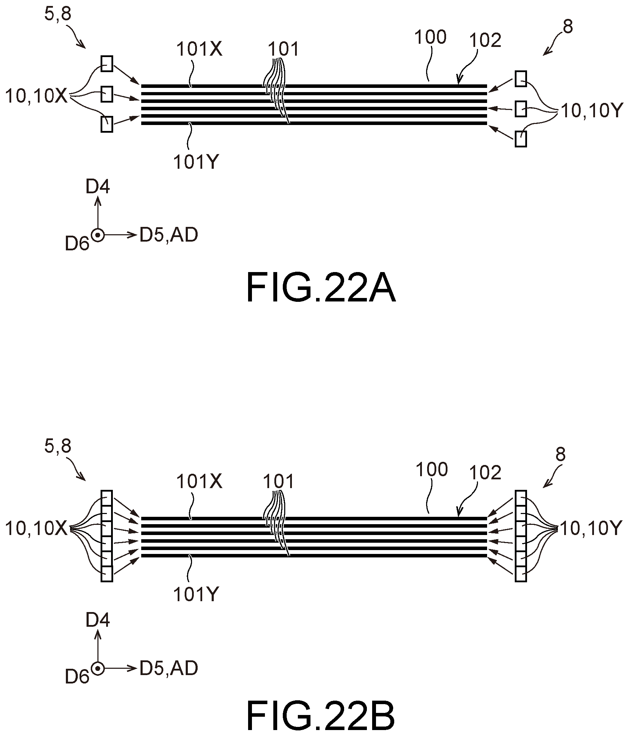

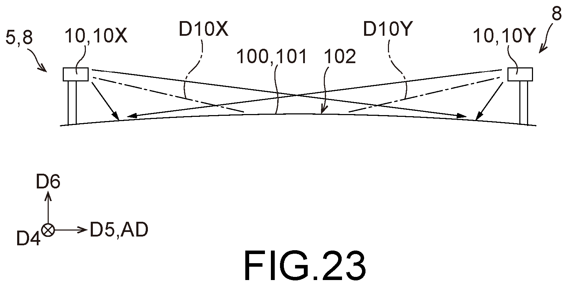

As illustrated in Fig. 22A, Fig. 22B, and Fig. 23, one or more illumination modules 10X included in the illumination module unit 8 and one or more other illumination modules 10Y included in the illumination module unit 8 may be positioned opposite each other in the fifth direction D5. The one or more illumination modules 10X included in the illumination module unit 8 and the one or more other illumination modules 10Y included in the illumination module unit 8 may be disposed apart from each other in the fifth direction D5. The one or more illumination modules 10X included in the illumination module unit 8 and the one or more other illumination modules 10Y included in the illumination module unit 8 may emit light toward each other in the fifth direction D5. A central optical path D10X (see Fig. 23) of projection light from the one or more illumination modules 10X included in the illumination module unit 8 and a central optical path D10Y (see Fig. 23) of projection light from the one or more other illumination modules 10Y included in the illumination module unit 8 may be oriented opposite to each other in the fifth direction D5. The central optical path of projection light means a direction and an orientation in which maximum luminance is obtained on the exit end 25a of the illumination module emitting projection light.

In the example illustrated in Fig. 22A, one or more projection patterns 101A included in the plurality of projection patterns 101 and one or more other projection patterns 101B included in the plurality of projection patterns 101 are projected onto the projection surface 100 from positions opposite each other in the fifth direction D5. As illustrated in Fig. 22B, one or more projection patterns 101 included in the plurality of projection patterns 101 may be projected from both sides in the fifth direction D5. All of the projection patterns 101 included in the projection patterns 101 may be projected from both sides in the fifth direction D5.

The fifth direction D5 is a longitudinal direction of the line-shaped illumination pattern 102. According to the examples illustrated in Fig. 22A, Fig. 22B, and Fig. 23, a change in brightness of the illumination pattern 102 in the longitudinal direction can be reduced. Accordingly, the illumination pattern 102 can be clearly observed over an entire length thereof even from a distance.

According to the examples illustrated in Fig. 22A, Fig. 22B, and Fig. 23, even when the projection surface 100 has unevenness, irregularities, undulations, and the like, the illumination pattern 102 that is easy to observe even from a distance can be displayed on the projection surface 100. In the example illustrated in Fig. 23, the projection surface 100 is curved and is raised at a central portion of the illuminated region 103 of the projection surface 100 on which the projection pattern 101 is projected. Even on such a projection surface 100, the illumination pattern 102 that is easy to observe even from a distance can be displayed on the projection surface 100.

In the example described above, the first illumination module unit 8 includes the plurality of the illumination modules 10. The illumination pattern 102 is displayed on the projection surface 100 by the plurality of the projection patterns 101 projected onto the projection surface 100 from respective ones of the plurality of illumination modules 10. In the example described above, the first illumination method includes the step of illuminating the projection surface 100 by using the illumination module unit 8. In the step of illuminating, the illumination pattern 102 is displayed on the projection surface 100 by the plurality of projection patterns 101 projected onto the projection surface 100 from the illumination module unit 8.

According to the first illumination module unit 8 and the first illumination method, the illumination pattern 102 projected onto the projection surface 100 is constituted by combining the plurality of projection patterns 101. Accordingly, a large illumination pattern 102 can be displayed on the projection surface 100. By adjusting shapes of the plurality of projection patterns 101, a complex illumination pattern 102 can be displayed. By adjusting brightness of the plurality of projection patterns 101, the illumination pattern 102 can be displayed brightly. As a result, the illumination pattern 102 that can be observed from a distance can be displayed on the projection surface 100. Furthermore, with a configuration in which each illumination module 10 displays a part of the illumination pattern 102 or one projection pattern 101 rather than the entirety of the illumination pattern 102, power consumption of the illumination module unit 8 as a whole can be reduced, and a decrease in laser safety can be suppressed.

In the example described above, the second illumination module unit 8 includes the plurality of the illumination modules 10. The plurality of the projection patterns 101 projected onto the projection surface 100 from respective ones of the plurality of illumination modules 10 are arranged in the fourth direction D4. The plurality of projection patterns 101 extend in the fifth direction D5 non-parallel to the fourth direction D4. In the example described above, the second illumination method includes the step of illuminating the projection surface 100 by using the illumination module unit 8. In the step of illuminating, the plurality of the projection patterns 101 are projected onto the projection surface 100 from the illumination module unit 8. The plurality of projection patterns 101 are arranged in the fourth direction D4. Each of the plurality of projection patterns 101 extends in the fifth direction D5 non-parallel to the fourth direction D4.

According to the second illumination module unit 8 and the second illumination method, the above-described effects obtained by the first illumination module unit 8 and the first illumination method can be obtained. That is, according to the second illumination module unit 8 and the second illumination method, the illumination pattern 102 that can be observed from a distance can be displayed on the projection surface 100.

In addition, according to the second illumination module unit 8 and the second illumination method, the width W102 of the illumination pattern 102 in the fourth direction D4 can be made larger than the width W101 of each projection pattern 101 in the fourth direction D4. The illumination pattern 102 having the large width W102 can be displayed by combining the plurality of projection patterns 101 each having the small width W101. The present inventors have confirmed that, by displaying one illumination pattern 102 having the large width W102 with the plurality of projection patterns 101 projected while being shifted in the fourth direction D4, the illumination pattern 102 can be made more conspicuous and can be made easier to observe from a distance while reducing total power consumption. In addition, by projecting the plurality of projection patterns 101 while shifting the projection patterns 101 in the fourth direction D4, a decrease in laser safety can be stably suppressed.

In the specific examples described above, the plurality of projection patterns 101 are patterns that are identical to each other. The plurality of projection patterns 101 may not be patterns that are identical to each other. The plurality of projection patterns 101 may be patterns that are different from each other.

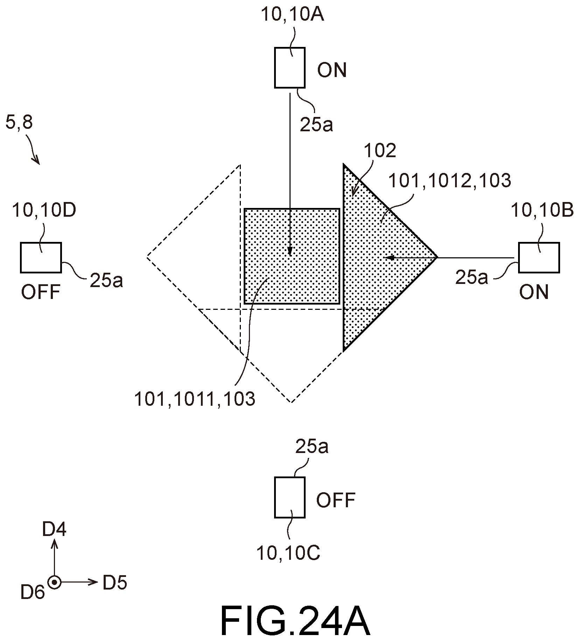

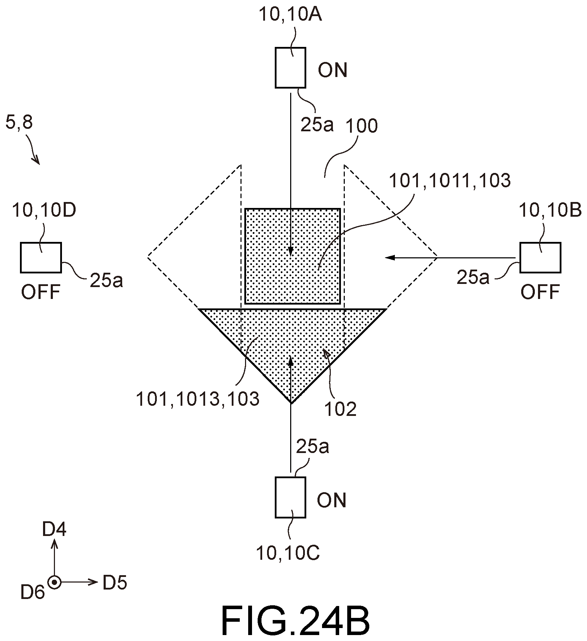

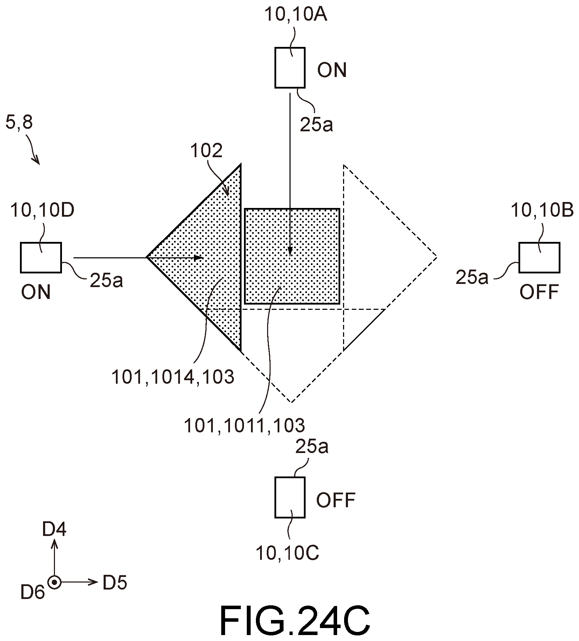

In the example illustrated in Fig. 24A to Fig. 24C, the illumination module unit 8 and the illumination system 5 include first to fourth illumination modules 10A to 10D. As illustrated in Fig. 24A to Fig. 24C, the first illumination module 10A projects a first projection pattern 1011 onto the projection surface 100. As illustrated in Fig. 24A, the second illumination module 10B projects a second projection pattern 1012 onto the projection surface 100. As illustrated in Fig. 24B, the third illumination module 10C projects a third projection pattern 1013 onto the projection surface 100. As illustrated in Fig. 24C, the fourth illumination module 10D projects a fourth projection pattern 1014 onto the projection surface 100. The first projection pattern 1011 is a quadrangular pattern. The second to fourth projection patterns 1012 to 1014 are triangular patterns having mutually different orientations.

In the example illustrated in Fig. 24A, the first projection pattern 1011 and the second projection pattern 1012 are projected onto the projection surface 100. In the example illustrated in Fig. 24A, the illumination pattern 102 displays an arrow pointing right on the sheet of Fig. 24A.

In the example illustrated in Fig. 24B, the first projection pattern 1011 and the third projection pattern 1013 are projected onto the projection surface 100. In the example illustrated in Fig. 24B, the illumination pattern 102 displays an arrow pointing downward on the sheet of Fig. 24B.

In the example illustrated in Fig. 24C, the first projection pattern 1011 and the fourth projection pattern 1014 are projected onto the projection surface 100. In the example illustrated in Fig. 24C, the illumination pattern 102 displays an arrow pointing left on the sheet of Fig. 24C.

In the examples illustrated in Fig. 24A to Fig. 24C, different information can be displayed on the projection surface 100 by selecting, as appropriate, the projection patterns 101 to be projected.

In the specific examples described above, wavelengths of projection light emitted from a plurality of the illumination modules 10 may be different among the plurality of illumination modules 10. The wavelengths of projection light emitted from a plurality of the modules 10 may be the same among the plurality of illumination modules 10. Colors of a plurality of the projection patterns 101 may be different from each other. The colors of a plurality of projection patterns 101 may be identical to each other.

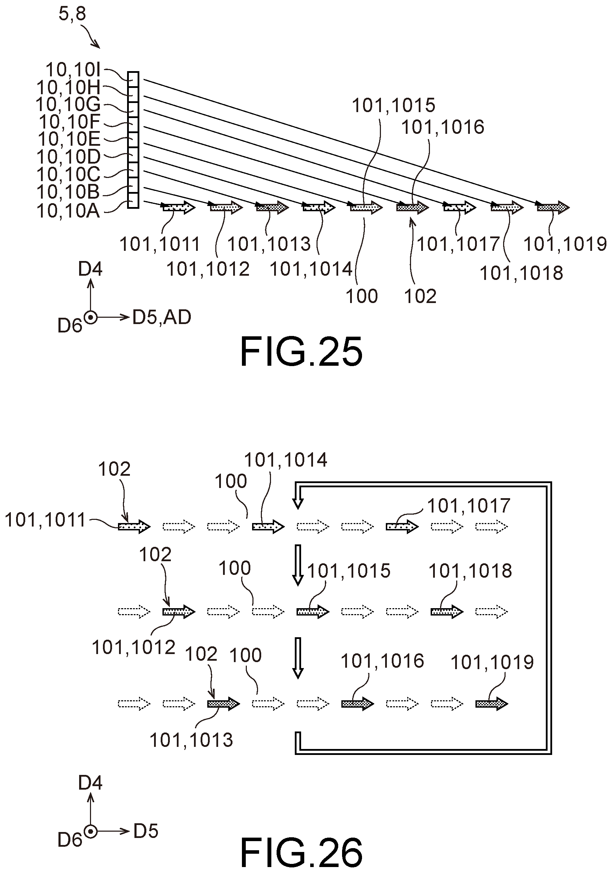

In the example illustrated in Fig. 25, the illumination module unit 8 and the illumination system 5 include first to ninth illumination modules 10A to 10I. As illustrated in Fig. 25, the first to ninth illumination modules 10A to 10I respectively project first to ninth projection patterns 1011 to 1019 onto the projection surface 100. The first to ninth projection patterns 1011 to 1019 are arranged in order in the fifth direction D5. The first to ninth projection patterns 1011 to 1019 have arrow patterns that are identical to each other. The arrow patterns formed by the first to ninth projection patterns 1011 to 1019 point to the first side in the fifth direction D5.

The first, fourth, and seventh illumination modules 10A, 10D, and 10G irradiate the projection surface 100 with red light (for example, light having a wavelength of 650 nm). The first, fourth, and seventh projection patterns 1011, 1014, and 1017 are projected with red light onto the projection surface 100.

The second, fifth, and eighth illumination modules 10B, 10E, and 10H irradiate the projection surface 100 with green light (for example, light having a wavelength of 550 nm). The second, fifth, and eighth projection patterns 1012, 1015, and 1018 are projected with green light onto the projection surface 100.

The third, sixth, and ninth illumination modules 10C, 10F, and 10I irradiate the projection surface 100 with blue light (for example, light having a wavelength of 450 nm). The third, sixth, and ninth projection patterns 1013, 1016, and 1019 are projected with blue light onto the projection surface 100.

As illustrated in Fig. 26, onto the projection surface 100, the projection patterns 101 are projected with red light, the projection patterns 101 are then projected with green light, and thereafter, the projection patterns 101 are projected with blue light, and this cycle may be continued. That is, first, the first, fourth, and seventh projection patterns 1011, 1014, and 1017 are projected with red light onto the projection surface 100 by the first, fourth, and seventh illumination modules 10A, 10D, and 10G. Next, the second, fifth, and eighth projection patterns 1012, 1015, and 1018 are projected with green light onto the projection surface 100 by the second, fifth, and eighth illumination modules 10B, 10E, and 10H. Thereafter, the third, sixth, and ninth projection patterns 1013, 1016, and 1019 are projected with blue light onto the projection surface 100 by the third, sixth, and ninth illumination modules 10C, 10F, and 10I. These three cycles may be repeatedly performed. According to this illumination method, movement toward the first side in the fifth direction D5 can be promoted.

Alternatively, in the example illustrated in Fig. 25, the first to ninth illumination modules 10A to 10I may sequentially project projection light onto the projection surface 100 in this order. The first to ninth projection patterns 1011 to 1019 may be sequentially projected onto the projection surface 100 in this order. According to this illumination method, movement toward the first side in the fifth direction D5 can be promoted.

In the examples illustrated in Fig. 24A to Fig. 26, by changing the projection patterns 101 to be projected and the illumination modules 10 that project the projection patterns 101, a moving image such as an animation can be displayed on the projection surface 100.

L1 central axis
D1 first direction
D2 second direction
D3 third direction
AD axial direction
RD radial direction
CD circumferential direction
5 illumination system
8 illumination module unit
10 illumination module
10A to 10I illumination module
20 light source
21 light-emitting portion
22 terminal
24A first cover member
24B second cover member
25 optical system
25a exit end
26 pattern optical system
26A diffractive optical element
26B light-shielding mask
27 lens system
27A collimator optical system
27B image-forming optical system
28A first lens
28B second lens
28C third lens
29a light-shielding portion
29b light-transmitting portion
30 case
31 tubular portion
31a inner surface
31b outer surface
32 tip-end tubular portion
33 first tubular portion
34 second tubular portion
35a tip-end step
35b intermediate step
36 annular groove
38 bottom portion
38a hole
39 outer protrusion portion
41 first case member
42 second case member
43 third case member
47 fastener
49 fastener
50 cover
50c contact portion
51 side portion
52 end portion
53 fastener
54 inner protrusion portion
55 receiving hole
56 inner protrusion portion
61 external connection connector
64 indication
65 dislodgement suppression mechanism
66 plate member
67 fastener
70A circuit board, first circuit board
70B second circuit board
71 board
72 element
73 wiring line
75 driver IC
75a channel
76 socket
77 connector
79 solder
90 connection member
91 FPC
91a hole
92 board connection member
93 FPC
95 fastener
98 fastener
100 projection surface
101 projection pattern
1011 to 1019 projection pattern
101X first outermost projection pattern
101Y second outermost projection pattern
101C intermediate projection pattern
101 projection pattern
102 illumination pattern
102X non-illuminated region
103 illuminated region
105 apparatus with illumination module
110 apparatus
111 housing
112 equipment
113 power supply unit
114 control unit
117 control device
118 power supply device.

## Claims

1. An illumination module that projects a projection pattern onto a projection surface, the illumination module comprising:
a light source that emits light;
an optical system that faces the light source in an axial direction of the illumination module;
a case that holds the light source and the optical system; and
a circuit board that is electrically connected to the light source,
wherein, in the axial direction, the circuit board is positioned at least partially between the light source and an exit end of the optical system from which light emitted from the light source exits.

2. The illumination module according to claim 1, further comprising:
an FPC that electrically connects the light source and the circuit board,
wherein the light source includes a terminal extending through the FPC, and
wherein the terminal is electrically connected to the FPC.

3. The illumination module according to claim 1, further comprising:
an FPC that electrically connects the light source and the circuit board,
wherein the FPC is attached to the case.

4. The illumination module according to claim 1,
wherein the case includes a tubular portion and a bottom portion connected to the tubular portion,
wherein the tubular portion is open on a first side in the axial direction and is connected to the bottom portion from a second side in the axial direction,
wherein the optical system is held inside the tubular portion, and
wherein the light source is held at the bottom portion.

5. The illumination module according to claim 4,
wherein the tubular portion includes a first tubular portion and a second tubular portion,
wherein the first tubular portion is positioned on the first side in the axial direction relative to the second tubular portion,
wherein the second tubular portion is narrower than the first tubular portion, and
wherein the circuit board is attached to the second tubular portion.

6. The illumination module according to claim 1,
wherein the circuit board includes a board, and an element and a wiring line that are provided on the board, and
wherein the board is oriented in a radial direction orthogonal to the axial direction.

7. The illumination module according to claim 1, comprising:
a second circuit board,
wherein the circuit board and the second circuit board are disposed apart from each other in a circumferential direction about an axis parallel to the axial direction.

8. The illumination module according to claim 5, wherein the circuit board has an annular shape through which the second tubular portion extends.

9. The illumination module according to claim 8,
wherein the circuit board includes a board, and an element and a wiring line that are provided on the board, and
wherein the board is oriented in the axial direction.

10. An illumination module that projects a projection pattern onto a projection surface, the illumination module comprising:
a light source that emits light;
an optical system that faces the light source in an axial direction of the illumination module;
a case that holds the light source and the optical system; and
a circuit board that is electrically connected to the light source,
wherein the circuit board includes a socket that is in contact with a terminal of the light source to be electrically connected to the terminal, and
wherein the light source is positioned between the circuit board and the optical system in the axial direction.

11. The illumination module according to claim 10, wherein, in projection onto a plane orthogonal to the axial direction, the circuit board is positioned coincident with the case or inside the case.

12. The illumination module according to claim 10, comprising a second circuit board that is positioned at least partially between an exit end of the optical system and the light source in the axial direction.

13. The illumination module according to claim 7 or 12, wherein the circuit board and the second circuit board are electrically connected using an FPC.

14. The illumination module according to claim 10, wherein a dislodgement suppression mechanism that suppresses detachment of the socket from the terminal is provided.

15. The illumination module according to claim 1 or 10,
wherein the light source includes a laser diode, and
wherein the circuit board includes a driver IC that drives the laser diode.

16. The illumination module according to claim 15,
wherein the driver IC includes a plurality of channels connected in parallel, and
wherein each of the plurality of channels includes an element separately.

17. The illumination module according to claim 1 or 10, wherein the circuit board is in contact with the case.

18. The illumination module according to claim 1 or 10, comprising:
a cover that partially covers the case,
wherein the circuit board is positioned between the case and the cover, and
wherein the circuit board is in contact with the cover.

19. The illumination module according to claim 1 or 10, comprising:
a cover that partially covers the case,
wherein the circuit board is positioned between the case and the cover, and
wherein the illumination module is to be used by being incorporated in or attached to another apparatus, and
wherein the case and/or the cover is to be fixed to the apparatus.

20. The illumination module according to claim 1 or 10, comprising:
a cover that partially covers the case,
wherein the circuit board is positioned between the case and the cover,
wherein the illumination module is to be used by being incorporated in or attached to another apparatus,
wherein the cover includes a contact portion that contacts the apparatus, and
wherein the contact portion is to be positioned between the circuit board and the apparatus.

21. The illumination module according to claim 1 or 10, comprising:
a cover that partially covers the case,
wherein the circuit board is positioned between the case and the cover, and
wherein the case and/or the cover includes an indication that indicates an installation orientation.

22. The illumination module according to claim 1 or 10, comprising:
a cover that partially covers the case,
wherein the circuit board is positioned between the case and the cover, and
wherein the cover includes an end portion that has a plate shape and that faces the case in the axial direction, and a side portion that has a tubular shape and that faces the case in a radial direction orthogonal to the axial direction.

23. The illumination module according to claim 22,
wherein the illumination module is to be used by being incorporated in or attached to another apparatus, and
wherein a connection connector for electrical connection to the apparatus is provided at a position offset from a center of the end portion.

24. The illumination module according to claim 1 or 10, comprising:
a cover that partially covers the case,
wherein the circuit board is positioned between the case and the cover, and
wherein, in projection onto a plane orthogonal to the axial direction, the cover is positioned coincident with the case or inside the case.

25. The illumination module according to claim 1 or 10, comprising:
a cover that partially covers the case,
wherein the circuit board is positioned between the case and the cover, and
wherein the cover has a circular contour in projection onto a plane orthogonal to the axial direction.

26. The illumination module according to claim 1 or 10, comprising:
a cover that partially covers the case,
wherein the circuit board is positioned between the case and the cover, and
wherein the cover has a circular contour in projection onto a plane orthogonal to the axial direction.

27. The illumination module according to claim 1 or 10, wherein the optical system includes a diffractive optical element and a lens optical system.

28. The illumination module according to claim 1 or 10, wherein the optical system includes a light-shielding mask and an image-forming optical system.

29. An apparatus with an illumination module comprising:
the illumination module according to claim 1 or 10; and
an apparatus in which the illumination module is incorporated or to which the illumination module is attached.

30. An illumination module unit comprising:
a plurality of the illumination modules according to claim 1 or claim 10,
wherein an illumination pattern is displayed on a projection surface by a plurality of projection patterns projected onto the projection surface from respective ones of the plurality of the illumination modules.

31. The illumination module unit according to claim 30,
wherein the plurality of projection patterns are arranged in a fourth direction, and
wherein each of the plurality of projection patterns extends in a fifth direction non-parallel to the fourth direction.

32. An illumination module unit comprising:
a plurality of illumination modules,
wherein a plurality of projection patterns projected onto a projection surface from respective ones of the plurality of illumination modules are arranged in a fourth direction, and
wherein each of the plurality of projection patterns extends in a fifth direction non-parallel to the fourth direction.

33. The illumination module unit according to claim 30, wherein each of the plurality of projection patterns has a line shape.

34. The illumination module unit according to claim 32, wherein, on the projection surface, the plurality of projection patterns are spaced apart from each other in the fourth direction.

35. The illumination module unit according to claim 32,
wherein the plurality of projection patterns include a first outermost projection pattern, a second outermost projection pattern, and an intermediate projection pattern,
wherein the first outermost projection pattern is positioned closest to a first side in the fourth direction,
wherein the second outermost projection pattern is positioned closest to a second side in the fourth direction,
wherein the intermediate projection pattern is positioned between the first outermost projection pattern and the second outermost projection pattern in the fourth direction, and
wherein, at a certain position in the fifth direction, the first outermost projection pattern is brighter than the intermediate projection pattern, and the second outermost projection pattern is brighter than the intermediate projection pattern.

36. The illumination module unit according to claim 32, wherein one or more illumination modules included in the plurality of illumination modules and one or more other illumination modules included in the plurality of illumination modules are positioned opposite each other in the fifth direction.

37. The illumination module unit according to claim 30, wherein the plurality of illumination modules are positioned at mutually different positions.

38. An illumination system comprising:
the illumination module unit according to claim 30;
a power source that supplies power to the plurality of illumination modules; and
a plurality of controllers positioned between the plurality of illumination modules and the power source,
wherein each of the plurality of controllers adjusts power supply from the power source to a corresponding illumination module included in the plurality of illumination modules, independently of power supply from the power source to another illumination module included in the plurality of illumination modules.

39. The illumination system according to claim 38, wherein each of the plurality of controllers adjusts presence or absence of power supply and/or an amount of power supply to the corresponding illumination module.

40. An illumination method comprising:
illuminating a projection surface by using the illumination module unit according to claim 30,
wherein, in the illuminating, the illumination pattern is displayed on the projection surface by the plurality of projection patterns projected onto the projection surface from the illumination module unit.

41. The illumination method according to claim 40,
wherein the plurality of projection patterns are arranged in a fourth direction, and
wherein each of the plurality of projection patterns extends in a fifth direction non-parallel to the fourth direction.

42. An illumination method comprising:
illuminating the projection surface by using the illumination module unit according to claim 32,
wherein, in the illuminating, the plurality of projection patterns are projected onto the projection surface from the illumination module unit,
wherein the plurality of projection patterns are arranged in the fourth direction, and
wherein each of the plurality of projection patterns extends in the fifth direction non-parallel to the fourth direction.

43. The illumination method according to claim 40, wherein each of the plurality of projection patterns has a line shape.

44. The illumination method according to claim 42, wherein, on the projection surface, the plurality of projection patterns are spaced apart from each other in the fourth direction.

45. The illumination method according to claim 42, wherein, in the illuminating, a thickness and/or brightness of an illumination pattern is controlled by adjusting the number of the plurality of projection patterns.

46. The illumination method according to claim 42, wherein, in the illuminating, one or more projection patterns included in the plurality of projection patterns are caused to blink.

47. The illumination method according to claim 46,
wherein, while the one or more projection patterns are caused to blink, one or more other projection patterns included in the plurality of projection patterns are turned on, and
wherein the one or more other projection patterns include a projection pattern positioned on a first side in the fourth direction relative to the one or more projection patterns, and a projection pattern positioned on a second side in the fourth direction relative to the one or more projection patterns.

48. The illumination method according to claim 42,
wherein the plurality of projection patterns include a first outermost projection pattern, a second outermost projection pattern, and an intermediate projection pattern,
wherein the first outermost projection pattern is positioned closest to a first side in the fourth direction,
wherein the second outermost projection pattern is positioned closest to a second side in the fourth direction,
wherein the intermediate projection pattern is positioned between the first outermost projection pattern and the second outermost projection pattern in the fourth direction, and
wherein, at a certain position in the fifth direction, the first outermost projection pattern is brighter than the intermediate projection pattern, and the second outermost projection pattern is brighter than the intermediate projection pattern.

49. The illumination method according to claim 42, wherein one or more projection patterns included in the plurality of projection patterns and one or more other projection patterns included in the plurality of projection patterns are projected onto the projection surface from positions opposite each other in the fifth direction.

50. The illumination method according to claim 42, wherein one or more projection patterns included in the plurality of projection patterns are projected onto the projection surface from two or more positions opposite each other in the fifth direction.
